# EUROPEAN PATENT SPECIFICATION

(11) **EP 2 295 511 B1**
(45) Date of publication and mention of the grant of the patent: **25.06.2014**
(21) Application number: 10176252.4
(22) Date of filing: 10.09.2010
(51) Int. Cl.: C09D 11/10, C09D 11/00

(54) **Ink composition for inkjet**
Tintenzusammensetzung für Tintenstrahl
Composition d'encre pour impression à jet d'encre

(30) Priority: 15.09.2009 JP 2009213676
(43) Date of publication of application: 16.03.2011
(73) Proprietor: Fujifilm Corporation, Minato-ku Tokyo (JP)
(72) Inventor: Shimohara, Norihide, Kanagawa (JP)
(74) Representative: Morpeth, Fraser Forrest

(56) References cited:
- EP-A1- 1 739 141
- EP-A1- 1 975 211
- EP-A1- 2 233 537
- WO-A2-2007/006639

## Description

### BACKGROUND OF THE INVENTION

### Technical Field

The present invention relates to an ink composition for inkjet.

### Description of the Related Art

Image recording methods for forming an image on a recording medium made of paper or a plastic sheet in accordance with image data signals include an electrophotographic method, a sublimation or melt-heat transfer method, and an inkjet method. Among these methods, an inkjet method is favorable since the recording device is not expensive; the running cost is low due to the highly efficient consumption of the ink composition (hereinafter, simply referred to as ink sometimes) as a result of directly forming an image on a recording medium by discharging ink only to a portion to which an image is to be formed; and an image with high fineness can be recorded by discharging extremely fine droplets.

According to an inkjet image recording method, printing can be performed not only on regular paper media but also on non-liquid-absorbing media such as a plastic sheet and a metal plate. In that case, improvement in printing speed and image quality has become an issue of great importance, and the time for ink droplets to dry and cure after printing largely affects the sharpness of the image.

One example of the inkjet method is a recording method in which a curable ink composition that is curable upon irradiation with actinic energy rays is used. According to this method, ink droplets can be cured immediately after the printing by applying actinic energy rays, whereby a highly sharp image can be formed. In the following, a curable ink composition that is curable upon irradiation with actinic energy rays may be simply referred to as a curable ink composition.

In order to impart vivid color tones and a high coloring power to an ink composition, size-reduction of pigment is an essential process. In particular, in the case of inks used for inkj et recording, the amount of discharged droplets is reduced since the sharpness of the image is greatly affected by the discharged ink droplets. Therefore, it is necessary to use particles having a smaller size than the thickness of a film of the cured ink formed as an image. As the size of the pigment particles is reduced in order to achieve the higher coloring power, the particles tends to become hard to disperse and easy to form an aggregation. Moreover, there is a problem in that the viscosity of the composition is increased as a result of adding a dispersant or the like that is used in order to improve dispersibility of the pigment particles. Since formation of a pigment aggregation or increase in viscosity of the ink composition may lower the ink dischargeability, it is important to select a pigment dispersant that does not cause aggregation or increase in viscosity of the pigment.

In the curable ink composition for inkjet recording, curability on a recording medium or film properties after curing are also important factors. In the curable ink composition for inkjet, in which sharpness of the image is ensured by immediately curing the ink by irradiating the same with actinic energy rays, components that inhibit curing, such as a solvent and a polymerization terminator, are not preferred since these components may become a cause of decrease in surface tackiness, bleeding, or decrease in productivity. When these compounds are incorporated in the ink composition, there are problems of causing blocking, a phenomenon in which a printed surface of a printed material adheres to an adjacent surface of another printed material that is stacked thereon (typically a back surface when printing is performed only on one side of the printed material), or smudging the surfaces of printed materials that are in contact with each other.

In view of the above, there is demand for an ink composition that exhibits sufficient fluidity during storage before use; maintains a stably dispersed state of small-size pigments over a long term; and exhibits excellent curability so that the ink composition cures immediately after the discharge onto a surface of a recording medium. Various proposals have been made concerning an ink composition that includes a dispersant, which dispersant has a function of dispersing pigment in ink with high efficiency and maintaining the stably dispersed state of the pigment over a long term.

For example, there are proposals concerning an ink composition that includes a polymer having a basic group as a dispersant with respect to a specific kind of pigment such as phthalocyanine or quinacridone (e.g., Japanese Patent Application Laid-Open (JP-A) No. 2003-321628); an ink composition that includes a dispersant such as a poly(ethyleneimine)-poly(12-hydroxystearic acid) graft polymer and a specific kind of monomer that dissolves the dispersant, but does not include a volatile organic solvent (e.g., JP-A No. 2004-131589); an ink composition that includes, as a dispersant, a polyurethane having a neutralized salt in its pendant, such as a carboxylate, a phosphate, a sulfonate or a quaternary ammonium (e.g., Japanese National Phase Publication No. 2002-503746); and a non-aqueous pigment-dispersed composition using a graft copolymer formed from a nitrogen atom-containing vinyl-polymerizable macromonomer (e.g., JP-A No. 2007-277506).

It is true that these ink compositions include pigment that is finely dispersed therein, and are stable as compared with conventional inks. However, in order to be used as an ink composition for inkjet recording having low viscosity, stability at high temperature of there ink compositions has yet to be improved.

When a curable ink composition for inkjet is used for applications such as a sign, the image formed by inkjet printing is placed under conditions at which the image is exposed to light over a long term, such as an outdoor environment. Although the image formed by using a pigment dispersion typically exhibits superior light fastness as compared with an image formed by using a dye, solving of the problem of image degradation due to exposure to light over a long term or difference in fading properties among different colors has been desired. In this regard, a technique of introducing an ultraviolet absorbent in ink or a pigment dispersion as a means of improving light fastness of the image, is disclosed (e.g., JP-A No. 2003-012744 and JP-A No. 2005-171028). When an ultraviolet absorbent is introduced in a pigment dispersion, light fastness thereof can be improved. However, storage stability for applications to inkjet inks has not been sufficient, and improvement thereof has been desired.

Similar ink jet inks are described in EP1739141, EP 1975211, WO 2007006639 and EP2233537

### SUMMARY OF THE INVENTION

According to the present invention an ink composition for inkjet is provided. The ink composition for ink jet includes a pigment dispersant, a pigment, a polymerizable compound, and a photopolymerization initiator. The pigment dispersant includes a repeating unit having an ultraviolet absorbing group, in an amount of from 0.5% by mass to 20% by mass with respect to the total mass of the pigment dispersant, and a repeating unit having a pigment adsorbing group, in an amount of from 5% by mass to 30% by mass with respect to the total mass of the pigment dispersant wherein:
(i) the ultraviolet absorbing group includes at least one selected from the group consisting of
   a group obtained by removing one hydrogen atom from a benzotriazole compound,
   a group obtained by removing one hydrogen atom from a benzophenone compound, and
   a group obtained by removing one hydrogen atom from a triazine compound; and
(ii) the repeating unit having a pigment adsorbing group is represented by the following Formula (1): 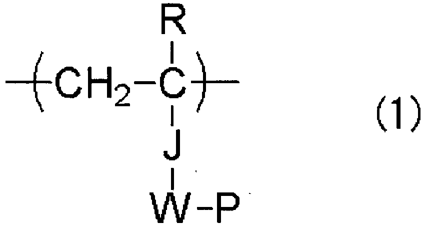 wherein:
   - R: represents a hydrogen atom or a methyl group;
   - J: represents -COO-, -CONR¹- or a phenylene group;
   - R¹: represents a hydrogen atom, an alkyl group, an aryl group or an arylalkyl group;
   - W: represents a single bond or a divalent linking group; and
   - P: is selected from the group consisting of: a group obtained by removing one hydrogen atom from acridone, a group obtained by removing one hydrogen atom from anthraquinone, a group obtained by removing one hydrogen atom from naphthalimide, a group obtained by removing one hydrogen atom from benzimidazole, a group obtained by removing one hydrogen atom from quinacridone, and a group obtained by removing one hydrogen atom from benzimidazolone.

### DETAILED DESCRIPTION OF THE INVENTION

As a result of conducting intensive studies, the present inventors have found that it is possible to provide an ink composition for inkjet that exhibits excellent light fastness of the image formed by inkjet recording without impairing light curability, as well as improved dispersibility and dispersion stability of the pigment, by using a pigment dispersant that has, in the molecule thereof at a specific ratio, (a) a repeating unit having an ultraviolet absorbing group that is easy to protect the pigment from light in a selective manner and (b) a repeating unit having a pigment adsorbing group that is easy to be adsorbed to the pigment; a pigment; and a polymerizable compound, under the presence of a photopolymerization initiator.

### Ink Composition for Inkjet

The ink composition for inkjet according to the invention at least includes a pigment dispersant including (a) repeating unit having an ultraviolet absorbing group in an amount of from 0.5% by mass to 20% by mass with respect to the total mass of the pigment dispersant and (b) repeating unit having a pigment adsorbing group in an amount of from 5% by mass to 30% by mass with respect to the total mass of the pigment dispersant; a pigment; a polymerizable compound; and a photopolymerization initiator
wherein:
(i) the ultraviolet absorbing group includes at least one selected from the group consisting of
   a group obtained by removing one hydrogen atom from a benzotriazole compound,
   a group obtained by removing one hydrogen atom from a benzophenone compound, and
   a group obtained by removing one hydrogen atom from a triazine compound; and
(ii) the repeating unit having a pigment adsorbing group is represented by the following Formula (1): 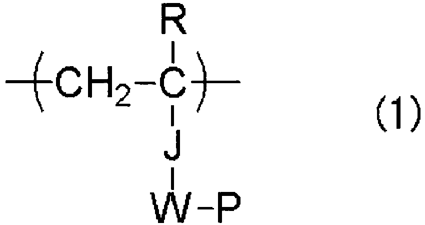 wherein:
   - R: represents a hydrogen atom or a methyl group;
   - J: represents -COO-, -CONR¹- or a phenylene group;
   - R¹: represents a hydrogen atom, an alkyl group, an aryl group or an arylalkyl group;
   - W: represents a single bond or a divalent linking group; and
   - P: is selected from the group consisting of: a group obtained by removing one hydrogen atom from acridone, a group obtained by removing one hydrogen atom from anthraquinone, a group obtained by removing one hydrogen atom from naphthalimide, a group obtained by removing one hydrogen atom from benzimidazole, a group obtained by removing one hydrogen atom from quinacridone, and a group obtained by removing one hydrogen atom from benzimidazolone.

The ink composition for inkjet may include further components such as a surfactant or an ultraviolet absorbent. In the following, the ink composition for inkjet may be referred to as an ink composition, sometimes.

The pigment dispersant included in the ink composition for inkjet according to the invention is a polymer that includes (a) repeating unit having an ultraviolet absorbing group in an amount of from 0.5% by mass to 20% by mass with respect to the total mass of the pigment dispersant, and (b) repeating unit having a pigment adsorbing group in an amount of from 5% by mass to 30% by mass with respect to the total mass of the pigment dispersant (in the following, also referred to as the specific polymer)
wherein:
(i) the ultraviolet absorbing group includes at least one selected from the group consisting of
   a group obtained by removing one hydrogen atom from a benzotriazole compound,
   a group obtained by removing one hydrogen atom from a benzophenone compound, and
   a group obtained by removing one hydrogen atom from a triazine compound; and
(ii) the repeating unit having a pigment adsorbing group is represented by the following Formula (1): 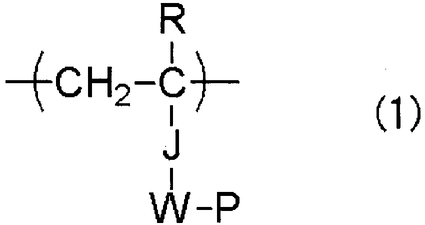 wherein:
   - R: represents a hydrogen atom or a methyl group;
   - J: represents -COO-, -CONR¹- or a phenylene group;
   - R¹: represents a hydrogen atom, an alkyl group, an aryl group or an arylalkyl group;
   - W: represents a single bond or a divalent linking group; and
   - P: is selected from the group consisting of: a group obtained by removing one hydrogen atom from acridone, a group obtained by removing one hydrogen atom from anthraquinone, a group obtained by removing one hydrogen atom from naphthalimide, a group obtained by removing one hydrogen atom from benzimidazole, a group obtained by removing one hydrogen atom from quinacridone, and a group obtained by removing one hydrogen atom from benzimidazolone.
The specific polymer may include a further repeating unit in addition to (a) and (b).

As mentioned above, including an ultraviolet absorbent in an ink composition for inkjet has been conventionally conducted in order to improve light fastness of the image formed by inkj et recording using an ink composition for inkjet. However, in the conventional technique, the ultraviolet absorbent is added to the ink composition for inkjet as one of the components, separately from the pigment dispersant. As a result, the ultraviolet absorbent is uniformly dissolved in the ink composition for inkjet, irrespective of the position of the pigment in the ink composition for inkjet. In that case, the ultraviolet absorbent that does not contribute to the light fastness of the image obtained by inkjet recording tends to exist in the ink composition for inkjet. Accordingly, if the ultraviolet absorbent is added to the ink composition in an amount corresponding to the amount of the pigment, it may not be possible to achieve sufficient light fastness of the image obtained by inkjet recording. Therefore, when the ultraviolet absorbent is dispersed in the ink composition, the amount of the ultraviolet absorbent is determined by taking the amount that does not contribute to the light fastness into consideration.

When the ultraviolet absorbent is dispersed in a state as mentioned above, it is inefficient because the ultraviolet absorbent exists not only near the pigment that needs to be protected from light (actinic energy rays) but also near the photopolymerization initiator and the polymerizable compound whose functions may be impaired when absorption of light is inhibited. Additionally, the content ratio of the polymerizable compound and the polymerization initiator, which components contribute to curability of the ink composition, tends to be too small due to the excess amount of ultraviolet absorbent in the ink composition.

The specific polymer, which functions as a pigment dispersant that disperses pigment included in the ink composition for inkjet according to the invention, has both (a) repeating unit having an ultraviolet absorbing group and (b) repeating unit having a pigment adsorbing group in the molecule thereof. Therefore, the pigment can be selectively protected by the ultraviolet absorbing group, while the pigment is adsorbed by the pigment adsorbing group. In particular, when the specific polymer has a molecular structure in which the ultraviolet absorbing group exists near the pigment adsorbing group, the ultraviolet absorbing group can exist locally near the pigment adsorbed to the pigment adsorbing group. As a result, light fastness can be exhibited in a more effective manner. Accordingly, it is possible to increase the amount of components that contribute to curing of the ink composition by the amount of excess ultraviolet absorbent conventionally included in the ink composition.

The molecular structure of the specific polymer makes it easier for the ultraviolet absorbing group to exist only near the pigment, that is, the concentration of ultraviolet absorbing group existing near the components that contribute to curing of the ink composition may be decreased. Accordingly, the ultraviolet absorbing group is less likely to inhibit absorption of light (actinic radiation rays) by a component that contributes to curing of the ink composition, such as a photopolymerization initiator or a polymerizable compound, and, therefore, decrease in curing of the ink composition upon irradiation with light (actinic radiation rays) may be suppressed.

Further, by (b) repeating unit having a pigment absorbing group included in the molecule of the specific polymer, excellent dispersibility of pigment particles in the ink composition and stability thereof may be enabled, and it is possible to form a high-quality image that exhibits excellent image sharpness and light fastness. Additionally, due to the excellent dispersion stability of the pigment by which the dispersed state of the pigment can be maintained over a long term, sedimentation or aggregation of the pigment can be suppressed and the dispersion stability of the pigment can be maintained, even when the ink composition is stored over a long term.

Moreover, the ink composition for inkjet according to the invention exhibits excellent fluidity, since a dispersion having low viscosity can be obtained due to the polymerizable compound having an affinity to the pigment dispersant.

Accordingly, the ink composition for inkjet according to the invention can be suitably used as an ink composition for inkjet whose viscosity needs to be strictly controlled, for applications in which images or characters are drawn using an inkjet printer.

In the following, essential components of the ink composition for inkjet according to the invention, i.e., a pigment dispersant (specific polymer), a pigment, a polymerizable compound and a photopolymerization initiator, are explained in detail.

### <Pigment Dispersant>

The pigment dispersant (specific polymer) included in the ink composition for inkjet according to the invention is a polymer at least including: (a) repeating unit having an ultraviolet absorbing group in an amount of from 0.5% by mass to 20% by mass with respect to the total mass of the pigment dispersant; and (b) repeating unit having a pigment adsorbing group in an amount of from 5% by mass to 30% by mass with respect to the total mass of the pigment dispersant wherein:
(i) the ultraviolet absorbing group includes at least one selected from the group consisting of
   a group obtained by removing one hydrogen atom from a benzotriazole compound,
   a group obtained by removing one hydrogen atom from a benzophenone compound, and
   a group obtained by removing one hydrogen atom from a triazine compound; and
(ii) the repeating unit having a pigment adsorbing group is represented by the following Formula (1): 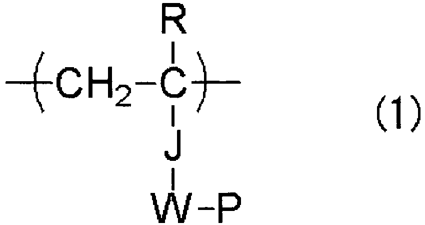 wherein:
   - R: represents a hydrogen atom or a methyl group;
   - J: represents -COO-, -CONR¹- or a phenylene group;
   - R¹: represents a hydrogen atom, an alkyl group, an aryl group or an arylalkyl group;
   - W: represents a single bond or a divalent linking group; and
   - P: is selected from the group consisting of: a group obtained by removing one hydrogen atom from acridone, a group obtained by removing one hydrogen atom from anthraquinone, a group obtained by removing one hydrogen atom from naphthalimide, a group obtained by removing one hydrogen atom from benzimidazole, a group obtained by removing one hydrogen atom from quinacridone, and a group obtained by removing one hydrogen atom from benzimidazolone.

The ink composition for inkjet according to the invention can provide a printed material that exhibits excellent light fastness of an image formed by inkj et recording, owing to the effect of ultraviolet adsorbing group introduced in the specific polymer as its partial structure. Further, by introducing the pigment adsorbing group as a partial structure of the specific polymer, the pigment as a colorant can be favorably dispersed and the stability thereof is less likely to be impaired even when the ink composition is placed under high temperature conditions over a long term. Accordingly, an ink that can be discharged in a stable manner from an inkjet printer can be obtained.

Moreover, the specific polymer directly protects the pigment from light by the ultraviolet absorbing group included in the molecule while adsorbing the pigment by the pigment adsorbing group included in the molecule. Therefore, the ink composition according to the invention exhibits excellent curing sensitivity during curing, as compared with the case in which an ultraviolet absorbent that does not adsorb the pigment is simply added or dispersed in an ink composition.

The specific polymer may be obtained, for example, by performing radical polymerization of an ethylenically unsaturated compound having an ultraviolet absorbing group and an ethylenically unsaturated compound having a pigment adsorbing group, as well as a macromonomer or other monomers that may be optionally used in combination. In this process, a radical polymerization initiator is typically used. Further, a chain transfer agent (such as 2-mercaptoethanol or dodecylmercaptan) may be added in addition to the initiator for the synthesis.

### -(a) Repeating Unit Having Ultraviolet Absorbing Group-

The specific polymer includes (a) repeating unit having an ultraviolet absorbing group.

Examples of the ultraviolet absorbing group include a group having a structure of a known ultraviolet absorbing compound from which one hydrogen atom is removed.

Known ultraviolet absorbing compounds include, for example, benzotriazole compounds described in JP-A No. 58-185677, JP-A No. 61-190537, JP-A No. 2-782, JP-A No. 5-197075 and JP-A No. 9-34057; benzophenone compounds described in JP-A No. 46-2784, JP-A No. 5-194483 and United States Patent No. 3,214,463; triazine compounds such as JP-A No. 4-298503, JP-A No. 8-53427, JP-A No. 8-239368, JP-A No. 10-182621 and Japanese National Phase Publication No. 8-501291.

In the invention, the benzotriazole compounds include not only benzotriazole but also benzotriazoles having a substituent such as an alkyl group (methyl, ethyl, tert-butyl or the like), a hydroxy group or a halogen atom (chlorine atom, bromine atom or the like). The same also applies to the benzophenone compounds and the triazine compounds.

In particular, 2-hydroxybenzotriazole group and a 2-hydroxybenzophenone group are preferred as the ultraviolet absorbing group included in the specific polymer.

Examples of the monomer from which a repeating unit having an ultraviolet absorbing group include di- or trihydroxybenzophenones such as 2,4-dihydroxybenzophenone and 2,2',4-trihydroxybenzophenone; products obtained by addition reaction with at least one of glycidyl methacrylate or 2-isocyanatoethyl (meth)acrylate; and 2-(2'-hydroxy-5'-methacryloyloxyethylphenyl)-2H-benzotriazole.

Among these, 2-(2'-hydroxy-5'-methacryloyloxyethylphenyl)-2H-benzotriazole is preferred.

The content ratio of the repeating unit having an ultraviolet absorbing group in the specific polymer with respect to the total mass of the specific polymer is from 0.5% by mass to 20% by mass. By introducing the repeating unit having an ultraviolet absorbing group in an amount within this range, degradation of dispersion stability of the pigment or degradation of curing sensitivity of the ink composition may be suppressed, and light fastness of the image formed by inkjet recording may be improved.

The content ratio of the repeating unit having an ultraviolet absorbing group in the specific polymer with respect to the total mass of the specific polymer is preferably from 1.0% by mass to 20% by mass, more preferably from 5% by mass to 20% by mass.

### -(b) Repeating Unit Having Pigment Adsorbing Group-

The specific polymer has (b) repeating unit having a pigment adsorbing group in an amount of from 5% by mass to 30% by mass with respect to the total mass of the specific polymer.

In order to improve the adsorption ability to the pigment, (b) the pigment adsorbing group preferably has at least one of an amino group, or a group having the same structure as that of a pigment or a similar structure to that of a pigment. When (b) the pigment adsorbing group includes at least one of an amino group, or a group having the same structure as that of a pigment or a similar structure to that of a pigment, the amount of free pigment dispersant may be reduced, and dispersibility of the pigment included in the ink composition or storage stability of the ink composition may be improved.

One method of increasing the adsorption ability of the pigment adsorbing group to the pigment is to increase the bonding force between the pigment adsorbing group and the pigment, such as electrostatic interaction or intermolecular force. Compounds having a similar structure to each other tend to cause interaction, and are likely to increase the intermolecular force therebetween. Typically, an organic pigment has its surface treated with rosin or a compound similar to the pigment, and an acidic group exists on the surface of the pigment in many cases. In such cases, by introducing an amino group into the pigment dispersant, the adsorption ability can be increased by acid-base interaction between the amino group and the acid group on the surface of the pigment.

Moreover, when the pigment adsorption group has a structure that is the same as that of a pigment or similar to that of a pigment, the degree of interaction with a pigment may be easier to further increase, whereby the adsorption ability to the pigment may be easier to increase. In the invention, the structure that is the same as that of a pigment or similar to that of a pigment refers to a structure having at least a partial skeleton of a pigment.

Examples of the pigment adsorbing group having the same structure as that of a pigment include those having a structure formed by removing one hydrogen atom from the structure of a pigment. Examples of the pigment adsorbing group having a similar structure to that of a pigment include those having a structure formed from a partial skeleton of a pigment, or a structure formed by removing one hydrogen atom from the structure of a pigment having a substituent. Examples of the substituent that a pigment may have include an alkyl group (methyl, ethyl, tert-butyl or the like), a hydroxy group, an amino group and a halogen atom (chlorine atom, bromine atom or the like).

### Partial Skeleton of Pigment

Specific examples of the useful pigment of a group having a partial skeleton of a pigment include phthalocyanine pigments, insoluble azo pigments, azo lake pigments, anthraquinone pigments, quinacridone pigments, dioxazine pigments, diketopyrrolopyrrole pigments, anthrapyrimidine pigments, anthranthrone pigments, indanthrone pigments, flavanthrone pigments, perinone pigments, perylene pigments, thioindigo pigments and quinophthalone pigments.

J is preferably -COO- or a phenylene group.

Exemplary alkyl groups represented by R¹ include a methyl group, an ethyl group, an n-propyl group, an i-propyl group, an n-butyl group, an n-hexyl group, an n-octyl group and a 2-hydroxyethyl group.

Exemplary aryl groups represented by R¹ include a phenyl group, a tolyl group and a naphthyl group.

Exemplary arylalkyl groups represented by R¹ include a benzyl group and a phenetyl group.

Among the above, R¹ is preferably a hydrogen atom.

In Formula (1), W represents a single bond or a divalent linking group. Exemplary divalent linking groups include a linear, branched or cyclic alkylene group, an arylalkylene group or an arylene group. These divalent linking groups may have a substituent.

The alkylene group represented by W is preferably an alkylene group having from 1 to 10 carbon atoms, more preferably an alkylene group having from 1 to 4 carbon atoms. Examples of the alkylene group include a methylene group, an ethylene group, a propylene group, a butylene group, a penthylene group, a hexylene group, an oxtylene group and a decylene group. Among these, a methylene group, an ethylene group and a propylene group are particularly preferred.

The arylalkylene group represented by W include an arylalkylene group having from 7 to 13 carbon atoms, and examples there of include a benzylidene group and a cinnamylidene group.

The arylene group represented by W include an arylene group having from 6 to 12 carbon atoms, and examples thereof include a phenylene group, a cumenylene group, a mesitylene group, a tolylene group and a xylylene group. Among these, a phenylene group is particularly preferred.

In the divalent linking group, a linking group may exist and examples thereof include - NR²-, -NR²R³ -, -COO-, -OCO-, -O-, -SO₂NH-, -NHSO₂-, -NHCOO-, -OCONH- and a group derived from a hetero ring.

R² and R³ each independently represent a hydrogen atom or an alkyl group. Specifically, a methyl group, an ethyl group, a propyl group or the like is preferred.

Among the linking groups represented by W, a single bond and an alkylene group are preferred, and a methylene group, an ethylene group and a 2-hydroxypropylene group are particularly preferred.

In Formula (1), P represents a group having a structure that is the same as that of a pigment or similar to that of a pigment. As mentioned above, the structure that is the same as that of a pigment or similar to that of a pigment refers to a structure having at least a partial skeleton of a pigment.

Further, the hetero ring residue is particularly preferably a hetero ring residue that is similar to the pigment to be used in the inkjet ink composition. Specifically, when a quinacridone pigment is used as the pigment in the ink composition, a group obtained by removing one hydrogen atom from quinacridone, a group obtained by removing one hydrogen atom from acridone or the like is particularly preferably used as the hetero ring residue. Similarly, when a quinacridone pigment is used as the pigment in the ink composition, P may be a group obtained by removing one hydrogen atom from anthraquinone.

The following are preferred specific examples of the repeating unit represented by Formula (1). It should be noted that the invention is not limited to these examples.

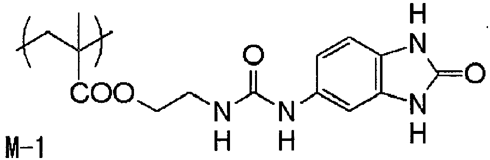

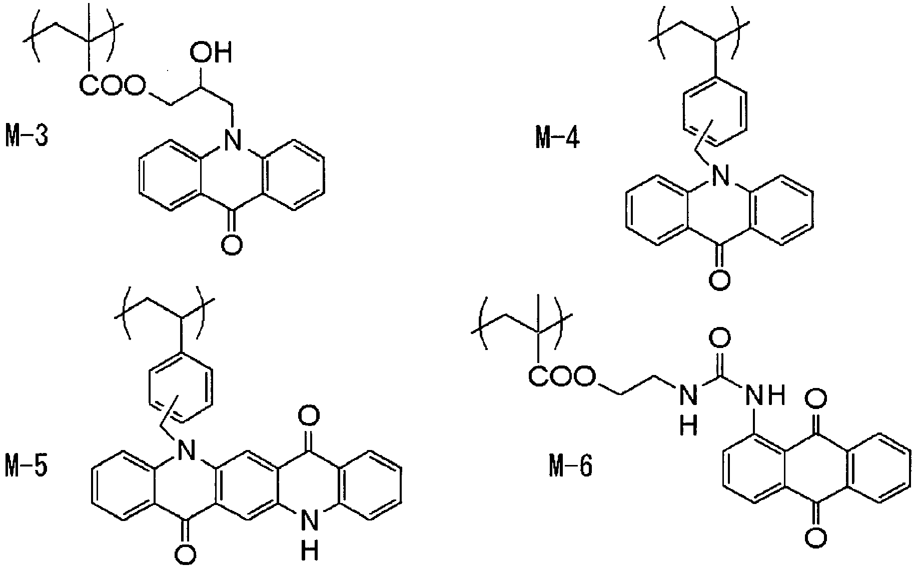

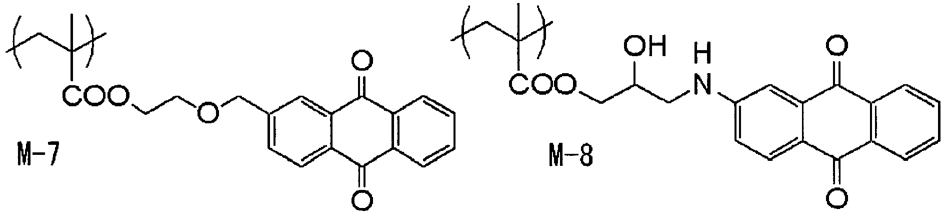

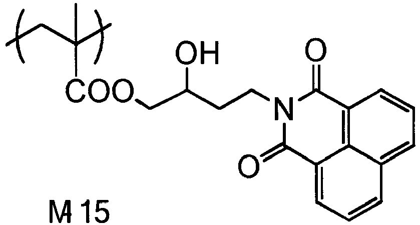

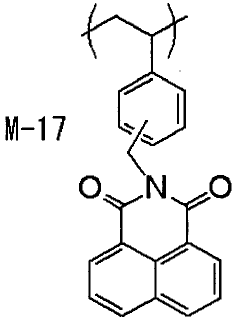

### Amino Group

The pigment adsorbing group preferably has an amino group.
More specifically, (b) repeating unit having a pigment adsorbing group preferably includes a repeating unit derived from a monomer having an amino group, and the specific polymer is preferably a copolymer in which a monomer having an amino group is used as a copolymerization component.

Specific examples of the monomer having an amino group include (meth)acrylates such as N,N-dimethylaminoethyl(meth)acrylate, N,N-dimethylaminopropyl(meth)acrylate, 1-(N,N-dimethylamino)-1,1-dimethylmethyl(meth)acrylate, N,N-dimethylaminohexyl(meth)acryate, N,N-diethylaminoethyl(meth)acrylate, N,N-diisopropylaminoethyl(meth)acrylate, N,N-di-n-butylaminoethyl(meth)acrylate, N,N-di-i-butylaminoethyl(meth)acrylate, morpholinoethyl(meth)acrylate, piperidinoethyl(meth)acrylate, 1-pyrrolidinoethyl(meth)acrylate, N,N-methyl-2-pyrrolidylaminoethyl(meth)acrylate, N,N-methylphenylaminoethyl(meth)acrylate and N-(tert-butylamino)ethylmethacrylate;

aminoalkyl(meth)acrylamides such as 2-(N,N-dimethylamino)ethyl(meth)acrylamide, 2-(N,N-diethylamino)ethyl(meth)acrylamide, 3-(N,N-diethylamino)propyl(meth)acrylamide, 3-(N,N-dimethylamino)propyl(meth)acrylamide, 1-(N,N-dimethylamino)-1,1-dimethylmethyl(meth)acrylamide and 6-(N,N-diethylamino)hexyl(meth)acrylamide;

vinylbenzylamines such as p-vinylbenzyl-N,N-dimethylamine, p-vinylbenzyl-N,N-diethylamine and p-vinylbenzyl-N,N-dihexylamine; and

2-vinylpyridine, 4-vinylpyridine and N-vinylimidazole.

Among these, N,N-dimethylaminoethyl(meth)acrylate, N,N-diethylaminoethyl(meth)acrylate, N,N-dimethylaminopropyl(meth)acrylate, N-tert-butylaminoethylmethacrylate, 3-(N,N-diethylamino)propyl(meth)acrylamide and 3-(N,N-dimethylamino)propyl(meth)acrylamide.

The content ratio of (b) repeating unit having a pigment adsorbing group with respect to the total mass of the specific polymer is from 5% by mass to 30% by mass.
As the pigment adsorbing group, (b) repeating unit having a pigment adsorbing group preferably includes an amino group or a partial skeleton of a pigment, more preferably includes both an amino group and a partial skeleton of a pigment. It is thought that by using two kinds of adsorbing groups that are adsorbed to the pigment by different mechanisms from each other, the specific polymer can be immediately and stably adsorbed to the pigment, thereby exhibiting dispersibility and dispersion stability.

In the invention, the content ratios with respect to the total mass of the specific polymer of (1) repeating unit including an amino group, (2) repeating unit including a partial skeleton of a pigment and (3) the total of (1) and (2) in the specific polymer are preferably (1) from 0% by mass to 30% by mass, (2) from 0% by mass to 30% by mass and (3) from 5% by mass to 30% by mass, respectively; more preferably (1) from 2.5% by mass to 25% by mass, (2) from 2.5% by mass to 25% by mass and (3) from 5% by mass to 27.5% by mass, respectively; and most preferably (1) from 5% by mass to 20% by mass, (2) from 5% by mass to 20% by mass and (3) from 10% by mass to 25% by mass, respectively.

### -(c) Repeating Unit Derived from Macromonomer Having Ethylenically Unsaturated Bond at Its Terminal-

The specific polymer is preferably a graft polymer further including, as a copolymerization component, (c) a repeating unit derived from a macromonomer having an ethylenically unsaturated bond at its terminal in an amount of from 10% by mass to 80% by mass with respect to the total mass of the specific polymer.

In the invention, the macromonomer that may be optionally used is formed from a polymer chain portion and a polymerizable functional group portion that has an ethylenically unsaturated double bond at its terminal. From the viewpoint of obtaining a desired graft polymer, the group having an ethylenically unsaturated double bond preferably exists only at one terminal of the polymer chain.

The polymerizable functional group portion that has an ethylenically unsaturated double bond at its terminal is preferably a functional group portion derived from a (meth)acryloyl group or a functional group portion derived from a vinyl group, more preferably a functional group derived from a (meth)acryloyl group.

The polymer chain portion of the macromonomer is typically a homopolymer or a copolymer formed from at least one kind of monomer selected from the group consisting of alkyl(meth)acrylate, styrene, styrene derivatives, acrylonitrile, vinyl acetate and butadiene, polypropylene oxide, or polylactone (such as polycaprolactone).

Further, the macromonomer preferably has a number average molecular weight (Mn) in terms of polystyrene of preferably from 1,000 to 10,000, more preferably from 2,000 to 9,000.
The macromonomer is preferably a macromonomer represented by the following Formula (2).

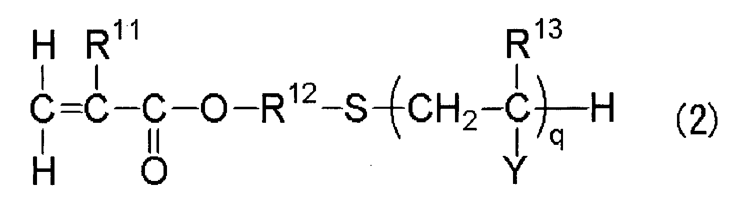

In Formula (2), R¹¹ and R¹³ each independently represent a hydrogen atom or a methyl group, and R¹² represents an alkylene group of from 1 to 12 carbon atoms. Y represents a phenyl group, a phenyl group having an alkyl group of from 1 to 4 carbon atoms or COOR¹⁴, R¹⁴ represents an alkyl group of from 1 to 6 carbon atoms, a phenyl group or an arylalkyl group of from 7 to 10 carbon atoms, and q represents an integer of from 20 to 200.

In Formula (2), the alkylene group of from 1 to 12 carbon atoms represented by R¹² may be a methylene group, an ethylene group or the like, which may further have a substituent (such as a hydroxy group). Two or more alkylene groups may be linked via an ester bond, an ether bond, an amide bond or the like. The carbon number of the alkylene group represented by R¹² is preferably from 2 to 6.

In Formula (2), Y represents a phenyl group, a phenyl group having an alkyl group of from 1 to 4 carbon atoms or COOR¹⁴, R¹⁴ represents an alkyl group of from 1 to 6 carbon atoms, a phenyl group or an arylalkyl group of from 7 to 10 carbon atoms. Y may further have a substituent (such as a hydroxy group).
Y is preferably an alkyl group of 1 to 4 carbon atoms, a phenyl group or a 2-hydroxyethyl group.

Preferred examples of the macromonomer include polymethyl(meth)acrylate, poly-n-butyl(meth)acrylate, poly-i-butyl(meth)acrylate, poly(butylmethacrylate-co-2-hydroxyethylmethacrylate), poly(methylmethacrylate-co-2-hydroxyethylmethacrylate) and a polymer in which a (meth)acryloyl group is bound to one of the terminals of a polystyrene molecule.

Examples of the macromonomers that are commercially available include a polystyrene oligomer having one terminal being methacryloylated (Mn=6,000, trade name: AS-6, manufactured by Toagosei Co., Ltd.), a polymethylmethacrylate oligomer having one terminal being methacryloylated (Mn=6,000, trade name: AA-6, manufactured by Toagosei Co., Ltd.), a poly-n-butyl acrylate oligomer having one terminal being methacryloylated (Mn=6,000, trade name: AB-6, manufactured by Toagosei Co., Ltd.) and a poly(butylmethacrylate-co-2-hydroxyethylmethacrylate) oligomer (Mn=6,000, trade name: AX-707S, manufactured by Toagosei Co., Ltd.)

The macromonomer is not limited to that represented by Formula (2), but a macromonomer represented by the following Formula (3) is also preferred.

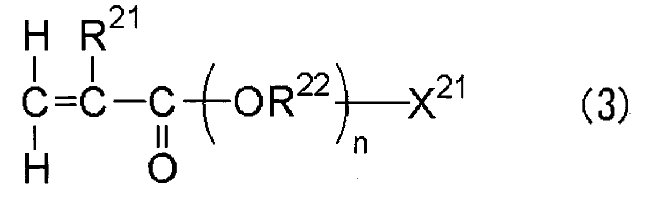

In Formula (3), R²¹ represents a hydrogen atom or a methyl group, and R²² represents an alkylene group of from 1 to 8 carbon atoms. X²¹ represents -OR²³ or -OCOR²⁴, where R²³ and R²⁴ each independently represent a hydrogen atom, an alkyl group of from 1 to 18 carbon atoms or an aryl group, and n represents an integer of from 2 to 200.

In Formula (3), the alkylene group of from 1 to 8 carbon atoms represented by R²² is preferably an alkylene group of from 1 to 6 carbon atoms, more preferably an alkylene group of from 2 or 3 carbon atoms.

In Formula (3), when X²¹ represents -OR²³ or -OCOR²⁴, the alkyl group of 1 to 18 carbon atoms represented by R²³ or R²⁴ is preferably an alkyl group of 1 to 12 carbon atoms.
Among these, R²³ is preferably a methyl group, an n-butyl group or a 2-ethylhexyl group, and R²⁴ is preferably a methyl group, a butyl group or a hexyl group.

In Formula (3), n represents an integer of from 2 to 200, preferably from 5 to 100, more preferably from 10 to 100.

Examples of the macromonomer represented by Formula (3), include polyethyleneglycol mono(meth)acrylate, polypropyleneglycol mono(meth)acrylate, polyethyleneglycol polypropyleneglycol mono(meth)acrylate and polytetramethyleneglycol monomethacrylate. These macromonomers may be commercially available products, or may be synthesized as appropriate.

The macromonomer represented by Formula (3) may also be commercially obtained, and exemplary commercial products include methoxypolyethyleneglycol methacrylate (trade name: NK ESTER M-40G, M-90G and M-230G (manufactured by Toagosei Co., Ltd.); trade name: BLEMMER PME-100, PME-200, PME-400, PME-1000, PME-2000 and PME-4000 (manufactured by NOF Corporation), polyethyleneglycol monomethacrylate (trade name: BLEMMER PE-90, PE-200 and PE-350, manufactured by NOF Corporation); polypropyleneglycol monomethacrylate (trade name: BLEMMER PP-500, PP-800 and PP-1000, manufactured by NOF Corporation), polyethyleneglycol polypropyleneglycol monomethacrylate (trade name: BLEMMER 70PEP-370B, manufactured by NOF Corporation), polyethyleneglycol polytetramethyleneglycol monomethacrylate (trade name: BLEMMER 55PET-800, manufactured by NOF Corporation), polypropyleneglycol polytetramethyleneglycol monomethacrylate (trade name: BLEMMER NHK-5050, manufactured by NOF Corporation).

Whether a macromonomer represented by Formula (2) or a macromonomer represented by Formula (3) should be used is preferably determined as appropriate according to the polarity of the polymerizable compound to be added to the ink composition together with the macromonomer. When a macromonmer having a similar polarity to that of the polymerizable compound is selected, dispersion stability tends to be increased. The polarity of the polymerizable compound or the macromonomer may be determined by an index such as an SP value.

The macromonomer is not limited to those represented by Formula (2) or Formula (3), but may be a macromonomer represented by the following Formula (4) or Formula (5).

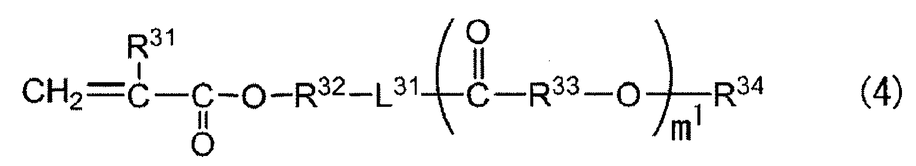

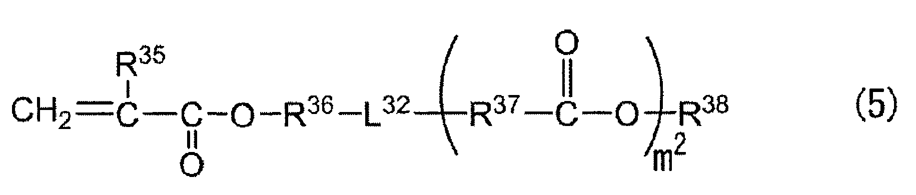

In Formula (4), R³¹ represents a hydrogen atom or a methyl group, and R³² represents an alkylene group of from 1 to 8 carbon atoms. R³³ represents an alkylene group of from 3 to 11 carbon atoms that may have a branched structure, and R³⁴ represents a hydrogen atom, an alkyl group of from 1 to 12 carbon atoms that may have a branched structure, or an aryl group of from 6 to 12 carbon atoms. L³¹ represents a divalent linking group formed from one or a combination of from 2 to 6 groups selected from the group consisting of a single bond, -O-, -S-, -C(=O)-, -NH-, - C(OH)-, -C(CH₃)- and -CH₂-. m¹ represents an integer of from 1 to 60.

In Formula (5), R³⁵ represents a hydrogen atom or a methyl group, and R³⁶ represents an alkylene group of from 1 to 8 carbon atoms. R³⁷ represents an alkylene group of from 3 to 11 carbon atoms that may have a branched structure, and R³⁸ represents a hydrogen atom, an alkyl group of from 1 to 12 carbon atoms that may have a branched structure, or an aryl group of from 6 to 12 carbon atoms. L³² represents a divalent linking group formed from one or a combination of from 2 to 6 groups selected from the group consisting of a single bond, -O-, -S-, -C(=O)-, -NH-, - C(OH)-, -C(CH₃)- and -CH₂-. m² represents an integer of from 1 to 60.

R³¹ in Formula (4) is preferably a hydrogen atom or a methyl group.
Examples of the alkylene group represented by R³² in Formula (4) include a methylene group, an ethylene group and a tert-butylene group, and the carbon number of R³² is preferably from 1 to 3.
Examples of the alkylene group represented by R³³ in Formula (4) include a trimethylene group which may have a substituent, a tetramethylene group which may have a substituent or a pentamethyelne group which may have a substituent. The carbon number of R³³ is preferably from 3 to 7.

Examples of the alkyl group represented by R³⁴ in Formula (4) include a methyl group, an ethyl group and a tert-butyl group, and the carbon number of the alkyl group represented by R³⁴ is preferably from 1 to 12.
Examples of the aryl group represented by R³⁴ in Formula (4) include a phenyl group, a tolyl group and a naphthyl group, and the carbon number of the aryl group represented by R³⁴ is preferably from 6 to 12.

The divalent linking group represented by L³¹ in Formula (4) is a divalent linking group formed from one or a combination of 2 to 6 groups selected from the group consisting of a single bond, -O-, -S-, -C(=O)-, -NH-, -CH(OH)-, -CH(CH₃)- and -CH₂-. Exemplary combinations of the 2 to 6 groups include a combination of -O- and -CH₂-, a combination of -O- and -CH(CH₃)-, and a combination of -O-, -CH₂- and -CH(OH)-. The order of these groups in the combination is not particularly limited.
Among these, a divalent linking group formed from one or a combination of 2 to 6 groups selected from the group consisting of -O-, -CH₂- and -CH(OH)- is preferred.

m¹ in Formula (4) is preferably from 2 to 80, more preferably from 5 to 60.

R³⁵ in Formula (5) is preferably a hydrogen atom or a methyl group.
Examples of the alkylene group represented by R³⁶ in Formula (5) include a methylene group, an ethylene group and a tert-butylene group, and the carbon number of R³⁶ is preferably from 1 to 5.
Examples of the alkylene group represented by R³⁷ in Formula (5) include a methylene group, an ethylene group and a tert-butylene group, and the carbon number of R³⁷ is preferably from 3 to 7.

Examples of the alkyl group represented by R³⁸ in Formula (5) include a methyl group, an ethyl group, a tert-butyl group and a 2-ethylhexyl group, and the carbon number of the alkyl group represented by R³⁸ is preferably 1 to 12.
Examples of the aryl group represented by R³⁸ in Formula (5) include a phenyl group, a tolyl group and a naphthyl group, and the carbon number of the aryl group represented by R³⁸ is preferably from 6 to 12.

The divalent linking group represented by L³² in Formula (5) is a divalent linking group formed from one or a combination of 2 to 6 groups selected from the group consisting of a single bond, -O-, -S-, -C(=O)-, -NH-, -CH(OH)-, -CH(CH₃)- and -CH₂-. Exemplary combinations of the 2 to 6 groups include a combination of -O- and -C(=O)- and a combination of -O-, -C(=O)- and - NH-. The order of these groups in the combination is not particularly limited.
Among these, a divalent linking group formed from one or a combination of 2 to 3 groups selected from the group consisting of -NH-, -O- and -C(=O)- is preferred.

m² in Formula (4) is preferably from 2 to 80, more preferably from 5 to 60.

Examples of the macromonomer represented by Formula (4) include an adduct of poly(ε-caprolactone) having a 2-ethylhexyloxy group and a carboxyl group in its terminal and glycidyl methacrylate. The macromonomer may be commercially obtained or may be synthesized as appropriate.
Examples of the macromonomer represented by Formula (5) include an adduct of poly(ε-caprolactone) having a 2-ethylhexanoyl group and a hydroxy group in its terminal and 2-isocyanatoethyl methacrylate. The macromonomer may be commercially obtained or may be synthesized as appropriate.

The macromonomer represented by Formula (4) may also be commercially obtained, and exemplary commercial products include FM5L and FA10L (trade name, manufactured by Daicel Chemical Industries, Ltd.)

Whether a macromonomer represented by Formula (4) or a macromonomer represented by Formula (5) should be used is preferably determined as appropriate according to the polarity of the polymerizable compound to be added to the ink composition together with the macromonomer. When a macromonmer having a similar polarity to that of the polymerizable compound is selected, dispersion stability tends to be increased. The polarity of the polymerizable compound or the macromonomer may be determined by an index such as an SP value.

The macromonomer used in the specific polymer is preferably a polymer which is obtained by addition polymerization of a lactone or a monomer having an ethylenically unsaturated bond has an ethylenically unsaturated bond at its terminal, that is the macromonomer used in the specific polymer is preferably a polylactone having an ethylenically unsaturated bond at its terminal or a polymer which is obtained by addition polymerization of a monomer having an ethylenically unsaturated bond and has an ethylenically unsaturated bond at its terminal. More specifically, it is particularly preferred to use a macromonomer whose polymer chain portion is a polylactone derived from a lactone, or a macromonomer whose polymer chain portion is a polymer formed by addition polymerization of a monomer having an ethylenically unsaturated bond.

The macromonomer including a polymer obtained by addition polymerization of a lactone and a monomer having an ethylenically unsaturated bond may be commercially obtained, and exemplary commercial products include poly(ε-caprolactone) (trade name: PLACCEL FA10L, 30% toluene solution, manufactured by Daicel Chemical Industries, Ltd.), which has a methyacryloyl group at its terminal.

The specific polymer may be a copolymer including a repeating unit derived from a further monomer that is copolymerizable, in addition to (a) repeating unit having an ultraviolet absorbing group, (b) repeating unit having a pigment adsorbing group, and (c) repeating unit derived from a macromonomer having an ethylenically unsaturated bond at its terminal.

Examples of the further monomer as mentioned above include unsaturated carboxylic acids (such as methacrylic acid, crotonic acid, itaconic acid, maleic acid and fumaric acid), aromatic vinyl compounds (such as styrene, α-methylstyrene, vinyl toluene, 2-vinyl pyridine, 4-vinyl pyridine and N-vinyl imidazole), alkyl (meth)acrylates (such as methyl (meth)acrylate, ethyl (meth)acrylate, b-butyl (meth)acrylate and i-butyl (meth)acrylate), alkylaryl (meth)acrylates (such as benzyl (meth)acrylate), substituted alkyl (meth)acrylates (such as glycidyl (meth)acrylate and 2-hydroxyethyl (meth)acrylate), vinyl carboxylates (such as vinyl acetate and vinyl propionate), vinyl cyanides (such as (meth)acrylonitrile and α-chloroacrylonitrile) and aliphatic conjugated dienes (such as 1,3-butadiene and isoprene).
Among these, unsaturated carboxylic acids, alkyl (meth)acrylates, alkylaryl (meth)acrylates and vinyl carboxylates are preferred.

Other monomers may be used in the production of the specific polymer within a range in which the effect of the invention is not impaired. In that case, the content ratio of a repeating unit derived from the other monomers is preferably 30% by mass or less with respect to the total mass of all the repeating units.

The weight average molecular weight (Mw) of the specific polymer may be determined as appropriate in view of the viscosity or the dispersion stability of the ink for inkjet. Specifically, the specific polymer preferably has a low average molecular weight when the viscosity of the ink is desired to be low, and the molecular weight of the specific polymer is preferably high in view of increasing the dispersion stability. In the ink for inkjet according to the invention, the weight average molecular weight of the specific polymer is preferably from 5,000 to 250,000, more preferably from 10,000 to 200,000, in order to achieve low viscosity and high dispersibility.
When the weight average molecular weight (Mw) of the specific polymer is within this range, an ink for inkjet that can be stably discharged even after being stored over a long term may be obtained.

In the invention, the weight average molecular weight (Mw) of the specific polymer is a weight average molecular weight in terms of polystyrene as measured by gel permeation chromatography (carrier: N-methylpyrrolidone).

The ink composition according to the invention may include only one kind of specific polymer, or two or more kinds of specific polymers may be used in combination. The content of the specific polymer in the ink composition is preferably from 1% by mass to 100% by mass, more preferably from 5% by mass to 50% by mass.
The ink composition according to the invention may include a known pigment dispersant in addition to the specific polymer, as long as the effect of the invention is not impaired. The content of the known pigment dispersant is preferably 50% by mass or less of the specific polymer.

### <Pigment>

The ink composition for inkjet according to the invention includes a pigment.
The pigment functions as a colorant for the ink composition for inkjet. In the invention, particles of the pigment having a small size is uniformly and stably dispersed in the ink composition by means of a pigment dispersant. As a result, the pigment dispersion according to the invention exhibits excellent coloring properties, and an image having excellent sharpness and weather fastness can be formed by using the pigment dispersion. Further, by minimizing the amount of coarse secondary particles, an ink composition for inkjet that exhibits excellent discharge stability can be obtained.

The pigment is not particularly limited and may be selected as appropriate according to purposes, but known organic pigments are preferably used in view of similarity in chemical structure of the pigment and the pigment dispersant. Exemplary pigments that may be used in the invention include those described in "Pigment Dictionary", edited by Seiji Ito (2000), W. Herbst and K. Hunger, "Industrial Organic Pigments", JP-A No. 2002-12607, JP-A No. 2002-188025, JP-A No. 2003-26978 and JP-A No. 2003-342503.

Exemplary organic pigments include yellow pigments, magenta pigments, cyan pigments, green pigments, orange pigments, brown pigments, violet pigments and black pigments.

Yellow pigments are pigments that exhibit a yellow color, and examples thereof include monoazo pigments, disazo pigments, non-benzidine azo pigments, azo lake pigments, condensed azo pigments, acidic dye lake pigments, basic dye lake pigments, anthraquinone pigments, quinophthalone pigments, pyrazolone pigments, acetolone pigments, metal complex pigments, nitroso pigments, metal complex azomethine pigments, benzimidazolone pigments and isoindoline pigments.

Pigments that are suitably used in the invention include those described in paragraph 0034 of JP-A No. 2008-224982. Among these, monoazo pigments, disazo pigments, benzimidazolone pigments such as acetolone pigments and isoindoline pigments are preferred, and C. I. Pigment Yellow (hereinafter, simply referred to as PY) 74, PY120, PY151, PY155, PY180 and PY185 are also preferred.

Magenta pigments are pigments that exhibit a red or magenta color, and examples thereof include monoazo pigments, β-naphthol pigments, disazo pigments, azo lake pigments, condensed azo pigments, acidic dye lake pigments, basic dye lake pigments, anthraquinone pigments, thioindigo pigments, perinone pigments, perylene pigments, quinacridone pigments, isoindolinone pigments, alizarin lake pigments, naphtholone pigments, naphthol AS lake pigmetns, naphthol AS pigments, and diketopyrrolopyrrol pigments.

Among these, pigments suitably used in the invention include those described in paragraph [0031] of JP-A No. 2008-224982. Among these, quinacridone pigments are preferred, and C. I. Pigment Red (hereinafter, simply referred to as PR) 42, PV19, PR122, PR202, PR209 and PR282 are particularly preferred.

Cyan pigments are pigments that exhibit a blue or cyan color, and examples thereof include disazo pigments, phthalocyanine pigments, acidic dye lake pigments, basic dye lake pigments, anthraquinone pigments and alkali blue pigments.
Pigments that are suitably used in the invention include those described in paragraph [0032] of JP-A No. 2008-224982. Among these, copper phthalocyanine pigments are preferred, and C. I. Pigment Blue (hereinafter, simply referred to as PB) 15, PB15:1, PB15:2, PB15:3, PB15:4 and PB15:6 are particularly preferred.

Green pigments are pigments that exhibit a green color, and examples thereof include phthalocyanine pigments and metal complex pigments.
Pigments that are suitably used in the invention include C. I. Pigment Green (hereinafter, simply referred to as PG) 7, PG8, PG10 and PG36.

Orange pigments are pigments that exhibit an orange color, and examples thereof include isoindoline pigments, anthraquinone pigments, β-naphthol pigmetns, naphthol AS pigments, isoindolinone pigments, perinone pigments, disazo pigments, quinacridone pigments, acetolone pigments and pyrazolone pigments.
Pigments that are suitably used in the invention include C. I. Pigment Orange (hereinafter, simply referred to as PO) 2, and pigments described in paragraph [0035] of JP-A No. 2008-224982.

Brown pigments are pigments that exhibit a brown color, and examples thereof include naphtholone pigments such as C. I. Pigment Brown (hereinafter, simply referred to as PBr) 25, PBr25 and PBr32.

Violet pigments are pigments that exhibit a violet color, and examples thereof include naphtholone pigments, perylene pigments, naphthol AS pigments and dioxazine pigments.
Pigments that are suitably used in the invention include C. I. Pigment Violet (hereinafter, simply referred to as PV) 13, PV17, PV23, PV29, PV32, PV37 and PV50.

Black pigments are pigments that exhibit a black color, and examples thereof include carbon black, indazine pigments and perylene pigments, such as C. I. Pigment Black (hereinafter, simply referred to as PBk) 1, PBk31 and PBk32.

Since a pigment having a smaller size exhibits more excellent coloring properties, the average particle diameter of the pigment is preferably from 0.01 µm to 0.4 µm, more preferably from 0.02 µm to 0.3 µm. The maximum particle diameter of the pigment is preferably 3 µm or less, more preferably 2 µm or less. From the viewpoint of suppressing nozzle clogging, the particle diameter of the pigment is preferably within the above range. In the invention, in which the specific polymer that exhibits excellent dispersibility and stability is used, a uniform and stable dispersion may be obtained even when fine pigment particles are used.
In the invention, the average particle diameter refers to a volume average particle diameter obtained by performing measurement of an ink composition by a known method such as dynamic light scattering measurement or laser diffractometry. The average particle diameter is used as an index for showing that the pigment having small size on average. The maximum particle diameter refers to a maximum particle diameter obtained by measuring the ink composition using a number-counting particle size distribution analyzer or a flow particle image analyzer. The maximum particle diameter is used in order to confirm whether or not coarse particles that cause discharge defects exist.

The particle diameter of the pigment in the ink composition may be measured by a known measurement method. Specific examples of the method include a centrifugal sedimentation light transmission method, an X-ray transmission method, a laser diffraction/scattering method, and a dynamic light scattering method.

The content of the pigment in the ink composition according to the invention in terms of a solid content is preferably from 1% by mass to 20% by mass, more preferably from 1.5% by mass to 15% by mass, with respect to the total mass of the ink composition.

### Preparation of Pigment Dispersion

The pigment may be dispersed by using a known dispersing apparatus, such as a ball mill, a sand mill, an attritor, a roll mill, a jet mill, a homogenizer, a paint shaker, a kneader, an agitator, a HENSCHEL mixer, a colloid mill, an ultrasonic homogenizer, a pearl mill and a wet jet mill.

The specific polymer is used for dispersing the pigment.
While dispersing the pigment, when the pigment concentration is too small, application of shear force by a dispersing device tends to be insufficient. Therefore, it is preferred to prepare a pigment dispersion having a higher pigment concentration than the inkjet ink in advance, and using this pigment dispersion by diluting the same in the preparation of ink. The pigment concentration in the pigment dispersion having a higher pigment concentration is preferably from 10% by mass to 50% by mass, more preferably from 10% by mass to 30% by mass, most preferably from 15% by mass to 30% by mass. When the pigment concentration is within this range, the force for pulverizing the aggregation of the pigment from media or the like in the dispersing device can be efficiently transmitted, thereby making it easier to complete the dispersion process in a relatively short time.

Further, when dispersing the pigment, a synergist, which is an analog of the pigment or the dye may also be used as a dispersion aid, as necessary. The dispersion aid is preferably used in an amount of from 1 part by mass to 10 parts by mass with respect to 100 parts by mass of the pigment.

A polymerizable compound, which is a component having a low molecular weight, may be used as a dispersion medium for the pigment dispersion used for preparing the ink composition for inkjet according to the invention. Further, a known solvent may be additionally used, but it is more preferred to use a polymerizable compound, which is a low-molecular-weight component, as the dispersion medium without using a solvent, from the viewpoint that it is easier to suppress bleeding or blocking when the amount of solvent is smaller.

In dispersing the pigment, when a non-polymerizable compound such as a solvent is used as the dispersion medium, the content ratio of the non-polymerizable compound in the ink composition is preferably 10% by mass or less, more preferably 5% by mass or less, most preferably 2% by mass or less, with respect to the total mass of the ink composition.
When the content of the non-polymerizable compound in the ink composition is within the above range, curability of the ink can be maintained, and degradation in the anti-solvent property and the blocking property of the cured ink image can be prevented.

### <Polymerizable Compound>

The ink composition for inkjet according to the invention includes a polymerizable compound.
The polymerizable compound is not particularly limited as long as it is a compound that causes polymerization reaction upon application of energy of some kind, and cures. The polymerizable compound may be any of a monomer, an oligomer or a polymer, but particularly preferably a polymerizable monomer that causes polymerization reaction by an initiation species generated from a polymerization initiator, including those known as a photo radical polymerizable compound or a photo cationic polymerizable compound.

The polymerizable compound may be used alone or in combination of two or more kinds thereof for the purpose of adjusting the reaction speed, physical properties of the ink, physical properties of the cured film, or the like. The polymerizable compound may be a monofunctional compound or a polyfunctional compound.

In the invention, it is also possible to use a known radical polymerizable compound that causes polymerization reaction from an initiation species generated from a photo radical initiator, as the polymerizable compound.

Examples of the known radical polymerizable compounds that may be used in the invention include (meth)acrylate compounds, (meth)acrylamide compounds, vinyl ether compounds, styrene compounds and N-vinyl compounds, which compounds are described in JP-A No. 2008-208190 and JP-A No. 2008-266561. In the present specification, (meth)acrylate refers to both or either one of acrylate and methacrylate, (meth)acrylamide refers to both or either one of acrylamide and methacrylamide and (meth)acrylic refers to both or either one of acrylic and methacrylic.

Among these, as the radical polymerizable compound used in the invention, one or more monomers selected from (meth)acrylate compounds, (meth)acrylamide compounds, vinyl ether compounds and N-vinyl compounds are preferred. From the viewpoint of the curing rate, viscosity of the ink composition and the film properties of the printed samples, it is also preferred to use a polyfunctional polymerizable monomer having two or more polymerizable functional groups and a monofunctional polymerizable monomer in combination.

Examples of the cationic polymerizable monomer that may be used in the invention as the polymerizable compound include epoxy compounds, vinyl ether compounds and oxetane compounds described in JP-A No. 6-9714, JP-A No. 2001-220526, JP-A No. 2001-40068, JP-A No. 2001-55507, JP-A No. 2001-310938, JP-A No. 2001-310937, JP-A No. 2001-220526, JP-A No. 2001-31892, JP-A No. 2003-341217 and JP-A No. 2008-266561.

In the ink composition for inkjet according to the invention, the cationic polymerizable monomer may be used alone or as a combination of two or more kinds thereof, but from the viewpoint of effectively suppressing contraction of the ink during curing, it is preferred to use at least one kind of oxetane compound and at least one kind of compound selected from an epoxy compound and a vinyl ether compound, in combination.

The content ratio of the polymerizable compound in the ink composition is preferably from 50% by mass to 95% by mass, more preferably from 60% by mass to 92% by mass, futher preferably from 70% by mass to 90% by mass, with respect to the total mass of the ink composition. When the content ratio of the polymerizable compound is within this range, favorable curability may be achieved.

### <Polymerization Initiator>

In the ink composition for inkjet according to the invention, a polymerization initiator is used in combination in view of improving the curing sensitivity.
The polymerization initiator preferably includes a radical polymerization initiator, more preferably includes a photopolymerization initiator.
The photopolymerization initiator that may be used in the invention is a compound that causes chemical reaction and generates radicals upon application of actinic energy rays or interaction with a sensitizing dye being in an electron-excited state.

The photopolymerization initiator may be appropriately selected from the compounds that exhibit sensitivity with respect to the actinic energy rays to be applied, such as ultraviolet rays with a wavelength of from 200 nm to 400 nm, far ultraviolet rays, g- rays, h-lrays, i- rays, KrF excimer laser beam, ArF excimer laser beam, electron beam, X-rays, molecular beam or ion beam.

The photopolymerization initiator is not particularly limited and compounds known in the art may be used, and examples thereof include those described in Bruce M. Monroe et al., Chemical Review, 93, 435 (1993), R. S, Davidson, Journal of Photochemistry and Biology A: Chemistry, 73, 81 (1993), J. P. Faussier, "Photonitiated Polymerization - Theory and Applications": Rapra Review Vol. 9, Report, Rapra Technology (1998), and M. Tsunooka et al., Prog. Polym. Sci., 21,1 (1996). It is also possible to use the compounds used for chemically amplified resists described in "Organic Materials for Imaging", edited by the Japanese Research Association for Organic Electronics Materials, published by Bunshin Design Printing Publishing and Digital Communications (1993), pp. 187-192.

Compounds that cause bond cleavage in an acidic or basic manner via interaction with a sensitizing dye being in an electron-excited state are also known, such as those described in F. D. Saeva, Topics in Current Chemistry, 156, 59 (1990), G. G. Maslak, Topics in Current Chemistry, 168, 1 (1993), H. B. Shuster et al., JACS, 112, 6329 (1990), and I. D. F. Eaton et al., JACS, 102, 3298 (1980).

As the photopolymerization initiator, for example, the photopolymerization initiators described in JP-A No. 2008-2089190 and JP-A No. 2008-266561 may be used. Among these, aromatic ketones, aromatic onium salt compounds, organic peroxides, hexarylbiimidazole compounds, ketoxime ester compounds, azinium compounds, metallocene compounds, active ester compounds and compounds having a carbon-halogen bond are preferred, and aromatic ketones and ketoxime ester compounds are particularly preferred.

The photopolymerization initiator as the polymerization initiator may be used alone or in combination of two or more kinds thereof.
The content ratio of the photopolymerization initiator in the ink composition is preferably from 0.1% by mass to 20% by mass, more preferably from 0.5% by mass to 15% by mass, and still more preferably from 1% by mass to 10% by mass, with respect to the total mass of the ink composition.

Since the ink composition for inkjet according to the invention includes a polymerizable compound, it can be used as a curable ink composition for inkjet that can be cured upon application of actinic energy rays. The ink composition for inkjet according to the invention, in which the pigment dispersion according to the invention is used, may exhibit vivid color tones and a high coloring power, thereby forming a high quality image. Further, since the ink composition for inkjet of this kind can form a high quality image based on digital data directly on a non-absorbing recording medium, the ink composition can be suitably used also in the production of printed materials having a large area.

The ink composition for inkjet according to the invention preferably has an ink viscosity at a temperature at which the ink is discharged of from 0.5 mPa·s to 30 mPa·s, more preferably from 0.5 mPa·s to 20 mPa·s, and still more preferably from 1 mPa·s to 15 mPa·s, in view of discharge properties of the ink composition from inkjet nozzles. It is preferred to determine the composition ratio as appropriate so that the ink viscosity falls within this range.
The ink viscosity at a discharge temperature may be adjusted to be within the above range by changing the type of the polymerizable compound or the pigment concentration within a range in which the effect of the invention is not impaired. For example, the ink viscosity can be lowered by increasing the ratio of a polymerizable compound having a lower viscosity, for example, a polymerizable compound having a lower polarity or a lower molecular weight, as the polymerizable compound, or by reducing the content of the pigment. On the other hand, for example, the ink viscosity can be increased by increasing the ratio of a polymerizable compound having a higher viscosity, for example, a polymerizable compound having a higher polarity or a higher molecular weight, as the polymerizable compound, or by increasing the content of the pigment.

The viscosity at 25° C (room temperature) of the ink may be, for example, from 1 mPa·s to 200 mPa·s, preferably from 2 mPa·s to 50 mPa·s, more preferably from 2.5 mPa·s to 30 mPa·s. By having a high viscosity at room temperature, penetration of ink into a recording medium can be suppressed even when a porous recording medium is used, the amount of uncured monomers can be reduced and generation of odor can be suppressed. Further, occurrence of dot bleeding at the time of landing of ink droplets can be suppressed, whereby the image quality may be improved. When the viscosity at 25° C of the ink is greater than 200 mPa·s, problems in delivery of the ink liquid may occur.

The surface tension of the ink composition for inkjet according to the invention is preferably from 20 mN/m to 40 mN/m, more preferably from 23 mN/m to 35 mN/m. When recording is performed on various kinds of recording media such as polyolefin, PET, coated paper or non-coated paper, the surface tension is preferably 20 mN/m or higher from the viewpoint of bleeding and penetration, and preferably 35 mN/m or less from the viewpoint of wetting properties.
The surface tension of the ink composition for inkjet can be adjusted by using a known surfactant.

The ink composition for inkjet according to the invention as prepared in the aforementioned manner is used for printing using an inkjet printer by applying the ink composition onto a recording medium. Thereafter, recording is performed by applying actinic energy rays to the printed ink composition to cure the same.
Since the printed material obtained from the ink has an image portion that is cured by application of actinic energy rays and exhibits excellent strength, it is applicable to various applications such as formation of an ink receiving layer (image area) of a planographic printing plate precursor, in addition to formation of an image from the ink.

### Actinic Energy Rays

The actinic energy rays used in the invention is not particularly limited as long as they can impart energy that can generate an initiation species in the ink composition for inkjet, and encompasses a wide range of from high-energy radiation rays such as α-rays, γ-rays and X-rays, light beams ranging from ultraviolet rays to infrared rays such as ultraviolet rays, visible rays and infrared rays, and particle beams such as electron beams. Among these, in view of curing sensitivity and availability of the device, ultraviolet rays and electron beams are preferred, and ultraviolet rays are more preferred. Accordingly, the curable composition according to the invention is preferably curable by application of ultraviolet rays. The light sources for the ultraviolet rays include a mercury lamp, a metal halide lamp, a light emitting diode (LED), a semiconductor laser and a fluorescent lamp. In the invention, a mercury lamp, a metal halide lamp, a light emitting diode and a fluorescent lamp are preferred, and those having a light emission wavelength of from 300 nm to 400 nm are more preferred.

### <Other Components>

### Sensitizing Dye

A sensitizing dye may be added to the ink composition for inkjet according to the invention in order to improve the sensitivity of the photopolymerization initiator. The sensitizing dye is preferably a compound that is selected from the following compounds and has an absorption wavelength in the range of from 350 nm to 450 nm.
Exemplary sensitizing dyes include polynucleic aromatics (such as pyrene, perylene, triphenylene and anthracene), xanthenes (such as fluorescein, eosin, erythrosine, Rhodamine B and rose bengal), cyanines (such as thiacarbocyanine and oxacarbocyanine), merocyanines (such as merocyanine and carbomerocyanine), thiazines (such as thionine, methylene blue and toluidine blue), acridines (such as acridine orange, chloroflavin and acriflavin), anthraquinones (such as anthraquinone), squaryliums (such as squarylium) and coumarins (such as 7-diethylamino-4-methylcoumarin).

More preferable examples of the sensitizing dye include the following compounds (IX) to (XIII).

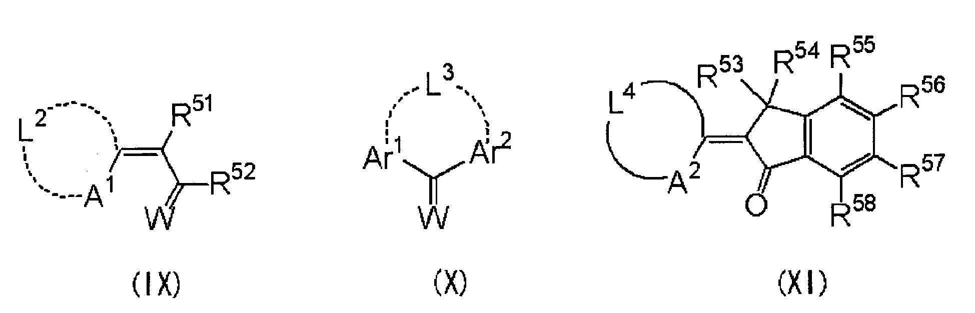

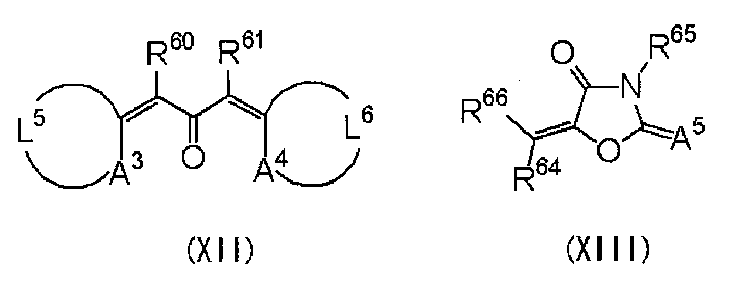

In Formula (IX), A¹ represents a sulfur atom or -NR⁵⁰-, R⁵⁰ represents an alkyl group or an aryl group, L² represents a group of non-metallic atoms that forms a basic nucleus of the dye together with the adjacent A² and the adjacent carbon atom, R⁵¹ and R⁵² each independently represent a hydrogen atom or a monovalent group of non-metallic atoms. R⁵¹ and R⁵² may be bound to each other to form an acidic nucleus of the dye. W represents an oxygen atom or a sulfur atom.

In Formula (X), Ar¹ and Ar² each independently represent an aryl group, and are linked to each other via a bond represented by -L³-. L³ represents -O- or -S-. W has the same definitions as that in Formula (IX).

In Formula (XI), A² represents a sulfur atom or NR⁵⁹, L⁴ represents a group of non-metallic atoms that forms a basic nucleus of the dye together with the adjacent A² and the adjacent carbon atom. R⁵³, R⁵⁴, R⁵⁵, R⁵⁶, R⁵⁷ and R⁵⁸ each independently represent a monovalent group of non-metallic atoms, and R⁵⁹ represents an alkyl group or an aryl group.

In Formula (XII), A³ and A⁴ each independently represent -S-, -NR⁶²- or -NR⁶³-, R⁶² and R⁶³ each independently represents a substituted or unsubstituted alkyl group or a substituted or unsubstituted aryl group, L⁵ and L⁶ each independently represent a group of non-metallic atoms that forms a basic nucleus together with the adjacent A³, A⁴ and the adjacent carbon atom. R⁶⁰ and R⁶¹ each independently represent a hydrogen atoms or a monovalent group of non-metallic atoms, or may be bound to each other to form an aliphatic or aromatic ring.

In Formula (XIII), R⁶⁶ represents an aromatic ring or a hetero ring that may have a substituent, and A⁵ represents an oxygen atom, a sulfur atom or -NR⁶⁷-. R⁶⁴, R⁶⁵ and R⁶⁷ each independently represent a hydrogen atom or a monovalent group of non-metallic atoms. R⁶⁷ and R⁶⁴ may be bound to each other to form an aliphatic or aromatic ring, and R⁶⁵ and R⁶⁷ may be bound to each other to form an aliphatic or aromatic ring.

Specific examples of the preferred compounds represented by Formulae (IX) to (XIII) include the following compounds (A-1) to (A-24).

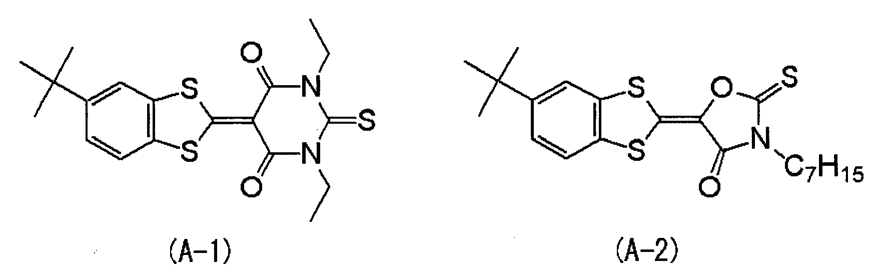

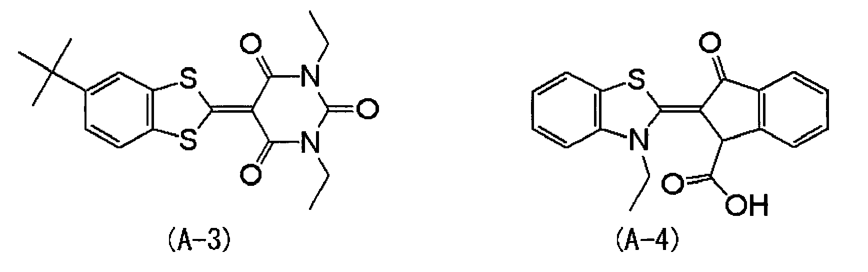

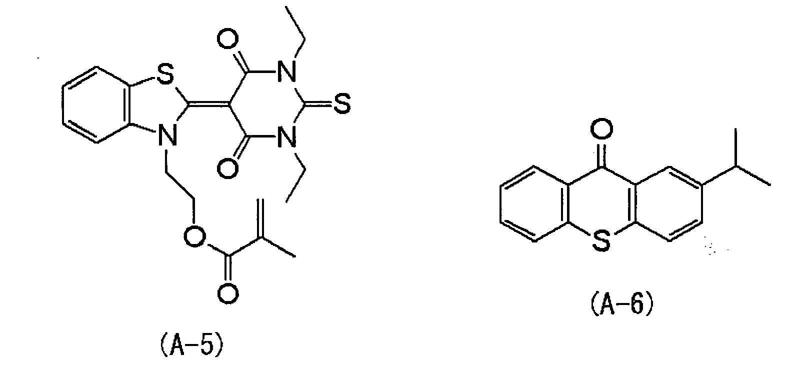

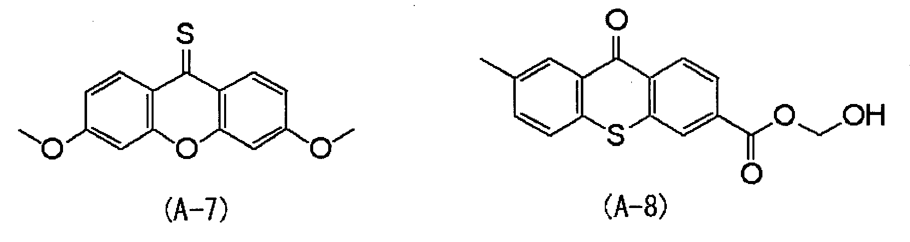

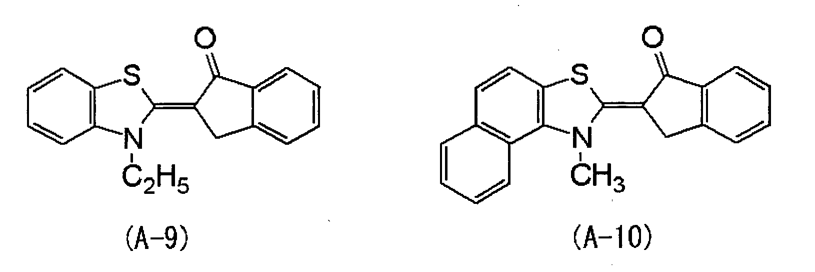

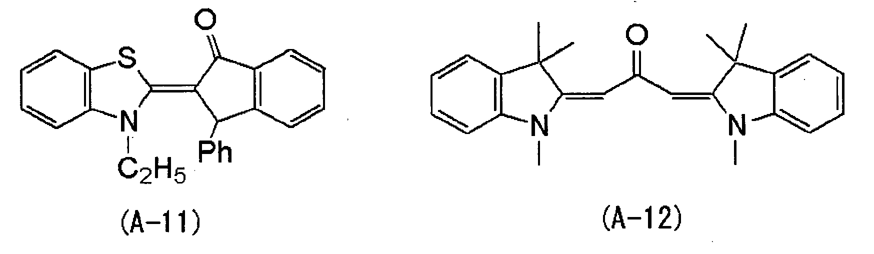

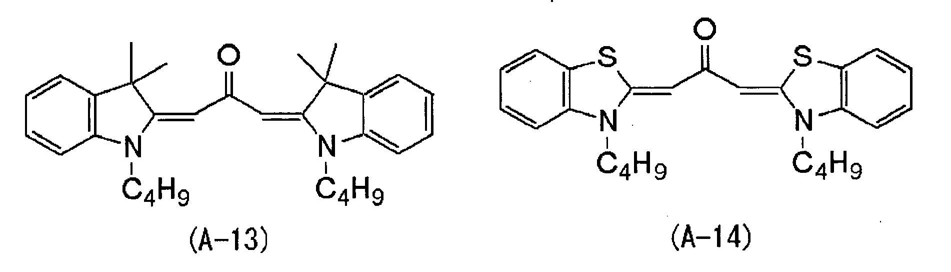

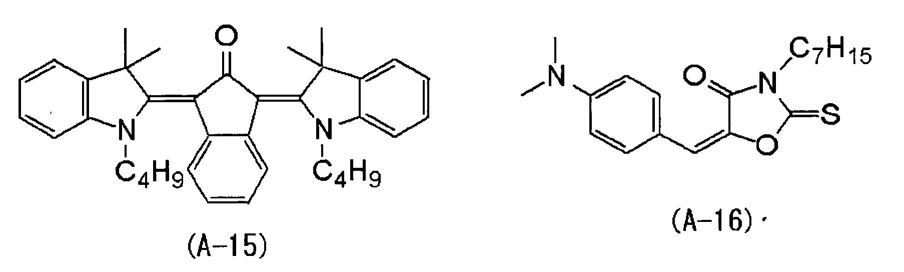

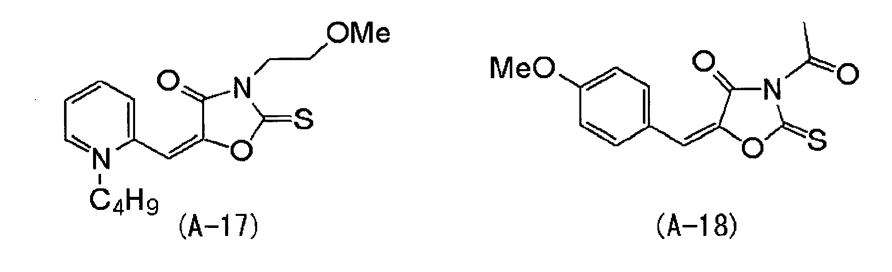

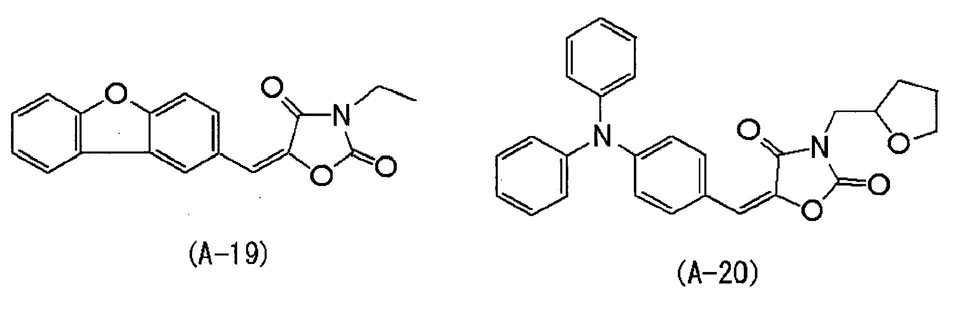

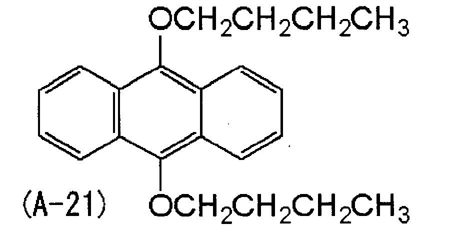

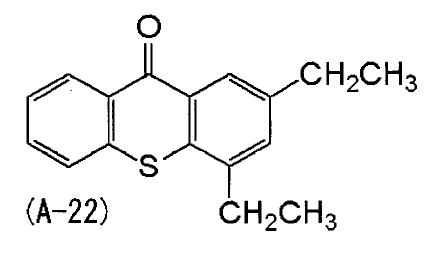

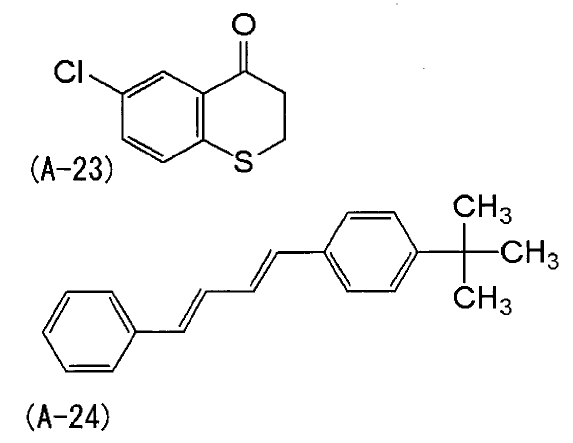

### Cosensitizer

A known compound having a function of further improving sensitivity or suppressing polymerization inhibition due to oxygen may be added as a cosensitizer to the ink composition for inkjet according to the invention.
Examples of the cosensitizer include amines such as the compound described in M. R. Sander et al., Journal of Polymer Society, Vol. 10, p. 3173 (1972), Examined Japanese Patent Application Publication No. 44-20189, JP-A No. 51-82102, JP-A No. 52-134692, JP-A No. 59-138205, JP-A No. 60-84305, JP-A No. 62-18537, JP-A No. 64-33104 and Research Disclosure Vol. 33825. More specific examples include triethanolamine, p-dimethylamino ethyl benzoate, p-formyldimethylaniline and p-methylthiodimethylaniline.

Other examples of the cosensitizer include thiols and sulfides, such as thiol compounds and sulfides, such as the thiol compounds described in JP-A No. 53-702, Examined Japanese Patent Application Publication No. 55-500806 and JP-A No. 5-142772 and the disulfide compounds described in JP-A No. 56-75643. Specific examples include 2-mercaptobenzothiazole, 2-mercaptobenzoxazole, 2-mercaptobenzimidazole, 2-mercapto-4(3H)-quinazoline and β -mercaptonaphthalene.
Other examples of the cosensitizer include, for example, amino acid compounds (such as N-phenylglycine), organic metal compounds described in JP-A No. 48-42965 (such as tributyltin acetate), hydrogen donors described in Examined Japanese Patent Application Publication No. 55-34414, sulfur compounds described in JP-A No. 6-308727 (such as trithian), and phosphorous compounds described in Japanese Patent Applicatin No. 6-250387 (such as diethyl phosphite).

In the ink composition for inkjet according to the invention, additives of various kinds may be used in addition to the sensitizing dye or the cosensitizer that are used in combination with the components such as the pigment and the specific polymer, and the preferred optional components such as the polymerizable compound and the polymerization initiator, according to purposes. For example, an antioxidant may be used for the purpose of improving stability of the ink composition.
The following are exemplary additives that may be used in the ink composition for inkjet according to the invention.

In the ink composition for inkjet according to the invention, it is possible to add organic or metal complex-based antifading agents of various kinds; conductive salts such as potassium thiocyanate, lithium nitrate, ammonium thiocyanate and dimethylamino hydrochloride for the purpose of controlling discharge properties, and a small amount of organic solvent in order to improve adhesiveness to the recording medium.

In the ink composition for inkjet according to the invention, various kinds of polymer compounds may be added for the purpose of adjusting the film properties. Exemplary polymer compounds include acrylic polymers, polyvinylbutyral resin, polyurethane resin, polyamide resin, polyester resin, epoxy resin, phenol resin, polycarbonate resin, polyvinylbutyral resin, polyvinylformal resin, shelac, vinyl resin, acrylic resin, rubber resin, waxes and other natural resins. These polymer compounds may be used in combination of two or more kinds.
In the ink composition for inkjet according to the invention, it is also possible to add a nonionic surfactant, a cationic surfactant, an organic fluoro compound or the like, for the purpose of adjusting the liquid properties.
As necessary, for example, it is also possible to add a leveling agent, a matte agent, a wax for adjusting the film properties, and a tackifier that does not inhibit polymerization in order to improve adhesiveness to a recording medium made of polyolefin, PET or the like.

The thus obtained ink composition for inkjet according to the invention is a colored curable composition in which a pigment as a colorant is uniformly and stably dispersed. Therefore, the pigment can be dispersed without causing aggregation or sedimentation with time even when the size of the pigment is small, and the effect thereof can be maintained. As a result, excellent coloring properties can be obtained.

### Inkjet Recording Method

The ink composition for inkjet according to the invention is preferably used to form an image with an inkjet printer, and this image is preferably fixed by applying actinic energy rays thereto. The inkjet recording method using the ink for inkjet according to the invention preferably perform discharge after heating the ink composition for inkjet to a temperature in a range of from 40° C to 80° C and adjusting the viscosity of the same to be 30 mPa·s or less. In this way, a high degree of discharge stability can be realized.
Typically, an ink composition that cures upon application of actinic energy rays exhibits a wide range of variation in viscosity due to changes in temperature during printing, since, in general, such an ink composition of actinic energy ray curable type has higher viscosity than that of an aqueous ink. The variation in viscosity largely may affect the size of droplets and the speed of discharging the same, thereby causing degradation in image quality. Accordingly, it is necessary to keep the temperature of the ink composition during printing as constant as possible. The width in which the temperature of the ink composition is to be controlled is preferably ± 5° C, more preferably ± 2° C, and still more preferably ± 1°C.

One of the characteristics of the inkjet recording device used for inkjet recording is that it has a stabilization unit that stabilizes the temperature of the ink composition. The portions whose temperature need to be controlled to be constant include the whole piping system and all members from the ink tank (when there is an intermediate tank, the intermediate tank) to the nozzle discharge face.

The method of controlling the temperature is not particularly limited. One preferred method includes controlling the heating according to the flow rate of the ink composition or the environment temperature by providing plural temperature sensors at each portion of the piping. Further, the head unit that performs heating is preferably thermally insulated so that the head unit is not affected by the external temperature. In order to shorten the time for the printer to start up by heating the same, or in order to reduce the amount of thermal energy loss, it is preferred to thermally insulate the head unit from other members, and reduce the amount of heat capacity of the whole heating unit.

The ink composition according to the invention is a curable ink composition for inkjet that cures when irradiated with actinic energy rays. In the following, irradiation conditions for the ink composition with actinic energy rays are described. The basic method for irradiation is disclosed in JP-A No. 60-132767. Specifically, light sources are provided on both sides of the head unit and the head and the light sources are moved by a shuttle method for scanning. The irradiation is performed after the lapse of a certain period of time from the landing of ink droplets. Further, curing is completed using another light source that is not driven. WO99/5441 discloses, as a method for irradiating with actinic radiation rays, a method in which optical fibers are used or a method in which a collimated light is applied to a mirror surface provided at the side surface of the head unit to irradiate a recorded portion with UV light. These methods for irradiation are applicable to the invention.

When the ink composition for inkjet according to the invention is used, it is preferable that the ink composition is heated to a certain temperature and the time period from the landing of ink droplets to the irradiation is desirably from 0.01 seconds to 0.5 seconds. More preferably, irradiation with actinic energy rays is performed after a time period of from 0.01 seconds to 0.3 seconds, and still more preferably from 0.01 seconds to 0.15 seconds from the landing of ink droplets. By controlling the time from the landing to the irradiation to such an extremely short period, occurrence of bleeding of landed ink droplets which have not been cured may be prevented.
Further, since the ink composition can be exposed to light before it penetrates into a portion that is so deep that light from the light source cannot reach, even in the case of a porous recording medium, remaining of unreacted monomers may be suppressed and, as a result, generation of odor may be suppressed.
By using the aforementioned inkjet recording method and the curable ink composition according to the invention in combination, a great synergy effect can be obtained. This effect is particularly remarkable when the ink composition has an ink viscosity at 25° C of 200 mPa·s or less.
By employing this recording method, the dot diameter of the ink that has landed on recording media of various kinds having different wetting properties may be kept constant, thereby improving the image quality. In order to form a color image, it is preferred to layer the colors in the order of lowest to highest in brightness. When inks having a low brightness are layered, it is difficult for radiation rays to reach the ink of the bottom layer, and tends to cause inhibition of curing sensitivity, increase in the amount of unreacted monomers, generation of odor or degradation in adhesiveness. Further, from the viewpoint of promoting curing, it is preferred to perform irradiation each time after the discharge of each color, although the irradiation can be performed at one time after the discharge of inks of all colors.

The inkjet recording device used in the invention is not particularly limited, and a commercially available inkjet recording device can be used. That is, in the invention, recording can be performed to a recording medium (printed material) using a commercially available inkjet recording device.
Under the preferred conditions for discharge as described above, the ink composition according to the invention exhibits suppressed degradation in pigment dispersibility and excellent coloring properties over a long term, due to the functions of the pigment dispersant (specific polymer) even after repeating heating and cooling of the ink composition. Moreover, the ink composition according to the invention has an advantage in that the degradation in discharge properties due to aggregation of the pigment can be suppressed.

### Recording Medium

The recording medium to which the ink composition for inkjet according to the invention can be applied is not particularly limited, and examples thereof include paper for ordinary use such as non-coated paper and coated paper, and resin films formed from various kinds of non-absorbing resin materials that is used for soft packaging, and exemplary plastic films include PET films, OPS films, OPP films, ONy films, PVC films, PE films and TAC films. Further, examples of plastics that may be used for the recording medium include polycarbonate, acrylic resin, ABS, polyacetal, PVA and rubber. Metals and glass are also applicable as the recording medium.

### EXAMPLES

In the following, the invention will be described in further detail with reference to the examples. However, the invention is not limited to the embodiments in these examples.

### <Synthesis of Specific Polymer>

### -Synthesis of Monomer M-4-

9(10)H acridone (manufactured by Wako Pure Chemicals Industries, Ltd.) (15 g) and sodium hydroxide (manufactured by Wako Pure Chemicals Industries, Ltd.) (3.4 g) were dissolved in dimethyl sulfoxide (manufactured by Wako Pure Chemicals Industries, Ltd.) (84 g), and heated to 45° C. CMS-P (chloromethylstyrene, AGC Seimi Chemical Co., Ltd.) (17.6 g) was dropped in this mixture, and a reaction solution was obtained by stirring the mixture for another 5 hours while heating the same at 50° C. This reaction solution is poured in a mixed solution of distilled water (30 g) and methanol (manufactured by Wako Pure Chemicals Industries, Ltd.) (30 g). The obtained precipitation was separated by filtering, and was washed with 300 g of a solution of distilled water and methanol mixed in equal mass. Monomer M-4 (17.5 g) was thus obtained.

### -Synthesis of Monomer M-17-

1,8-naphthalimide (manufactured by Kanto Chemical) (355.0 g) was dissolved in N-methyl pyrrolidone (manufactured by Wako Pure Chemicals Industries, Ltd.) (1500 mL), and nitrobenzene (manufactured by Wako Pure Chemicals Industries, Ltd.) (0.57 g) was added thereto at 25° C. DBU (diazabicycloundecene) (manufactured by Wako Pure Chemicals Industries, Ltd.) (301.4 g) was dropped in this mixture. After stirring the same for 30 minutes, CMS-P (412.1 g) was dropped therein, and a reaction solution was obtained by stirring for another 4 hours while heating the same at 60° C. Isopropanol (manufactured by Wako Pure Chemicals Industries, Ltd.) (2.7 L) and distilled water (0.9 L) were added to this reaction solution and stirred while cooling for 5° C. The obtained precipitation was separated by filtering and washed with isopropanol (1.2 L). Monomer M-17 (544.0 g) was thus obtained.

### -Synthesis of Specific Polymer 1-

RUVA-93 (1.0 g), N,N-dimethylaminopropylacrylamide (manufactured by Wako Pure Chemical Industries, Ltd., hereinafter also referred to as DMAPAAm) (4.0 g), Monomer M-17 (2.0 g), AA-6 (10.0 g), a poly(ε-caprolactone) having a methacryloyl group at its terminal (trade name: PLACCEL FA10L, 30% toluene solution, manufactured by Daicel Chemical Industries Limited.) (10.0 g) and methyl ethyl ketone (33 g) were introduced in a nitrogen-substituted three-neck flask, and this was stirred using a stirrer while allowing nitrogen to flow in the flask, and the temperature was raised to 65° C by heating. To this mixture, 20 mg of V-65 were added and heated at 65° C for 2 hours while stirring. Two hours later, 20 mg of V-65 were added thereto and heated for another 3 hours while stirring. The obtained reaction solution was poured in hexane (1,000 mL) while stirring, and Specific Polymer 1 (weight average molecular weight: 151,000) was obtained by heating and drying the precipitation formed in the reaction solution.

### -Synthesis of Specific Polymer 2-

RUVA-93 (2.0 g), DMAPAAm (1.5 g), Monomer M-4 (3.5 g), a poly(butylacrylate-co-2-hydroxyethylmethacrylate) having a methacryloyl group at its terminal (trade name: AX-707S, 60% toluene solution, manufactured by Toa Gosei Co., Ltd.) (21.7 g) and methyl ethyl ketone (35 g) were introduced in a nitrogen-substituted three-neck flask, and this was stirred using a stirrer while allowing nitrogen to flow in the flask, and the temperature was raised to 65° C by heating. To this mixture, 40 mg of V-65 were added and heated at 65° C for 2 hours while stirring. Two hours later, 40 mg of V-65 were added thereto and heated for another 3 hours while stirring. The obtained reaction solution was poured in hexane (1,000 mL) while stirring, and Specific Polymer 2 (weight average molecular weight: 64,000) was obtained by heating and drying the precipitation formed in the reaction solution.

### -Synthesis of Specific Polymer 3-

RUVA-93 (0.2 g), DMAPAAm (1.5 g), Monomer M-4 (3.5 g), AX-707S (21.7 g) and methyl ethyl ketone (35 g) were introduced in a nitrogen-substituted three-neck flask, and this was stirred using a stirrer while allowing nitrogen to flow in the flask, and the temperature was raised to 65° C. To this mixture, 40 mg of V-65 were added and heated at 65° C for 2 hours while stirring. Two hours later, 40 mg of V-65 were added thereto and heated for another 3 hours while stirring. The obtained reaction solution was poured in hexane (1,000 mL) while stirring, and Specific Polymer 3 (weight average molecular weight: 51,000) was obtained by heating and drying the precipitation formed in the reaction solution.

### -Synthesis of Specific Polymer 4-

RUVA-93 (2.0 g), tBuAEMA (0.4 g), Monomer M-4 (0.6 g), AA-6 (14.0 g), methyl methacrylate (manufactured by Wako Pure Chemical Industries, Ltd., hereinafter also referred to as MMA) (3.0 g) and methyl ethyl ketone (40 g) were introduced in a nitrogen-substituted three-neck flask, and this was stirred using a stirrer while allowing nitrogen to flow in the flask, and the temperature was raised to 65° C by heating. To this mixture, 20 mg of V-65 were added and heated at 65° C for 2 hours while stirring. Two hours later, 20 mg of V-65 were added thereto and heated for another 3 hours while stirring. The obtained reaction solution was poured in hexane (1,000 mL) while stirring, and Specific Polymer 4 (weight average molecular weight: 121,000) was obtained by heating and drying the precipitation formed in the reaction solution.

### -Synthesis of Specific Polymer 5-

RUVA-93 (2.0 g), DMAPAAm (1.5 g), Monomer M-4 (3.5 g), AA-6 (2.0 g), MMA (11.0 g) and methyl ethyl ketone (40 g) were introduced in a nitrogen-substituted three-neck flask, and this was stirred using a stirrer while allowing nitrogen to flow in the flask, and the temperature was raised to 65° C by heating. To this mixture, 20 mg of V-65 were added and heated at 65° C for 2 hours while stirring. Two hours later, 20 mg of V-65 were added thereto and heated for another 3 hours while stirring. The obtained reaction solution was poured in hexane (1,000 mL) while stirring, and Specific Polymer 5 (weight average molecular weight: 86,000) was obtained by heating and drying the precipitation formed in the reaction solution.

### -Synthesis of Specific Polymer 6-

RUVA-93 (1.0 g), DMAPAAm (1.6 g), Monomer M-4 (1.4 g), AA-6 (16.0 g) and methyl ethyl ketone (40 g) were introduced in a nitrogen-substituted three-neck flask, and this was stirred using a stirrer while allowing nitrogen to flow in the flask, and the temperature was raised to 65° C by heating. To this mixture, 20 mg of V-65 were added and heated at 65° C for 2 hours while stirring. Two hours later, 20 mg of V-65 were added thereto and heated for another 3 hours while stirring. The obtained reaction solution was poured in hexane (1,000 mL) while stirring, and Specific Polymer 7 (weight average molecular weight: 186,000) was obtained by heating and drying the precipitation formed in the reaction solution.

### -Synthesis of Comparative Polymer 1-

RUVA-93 (4.0 g), AA-6 (16.0 g) and methyl ethyl ketone (40 g) were introduced in a nitrogen-substituted three-neck flask, and this was stirred using a stirrer while allowing nitrogen to flow in the flask, and the temperature was raised to 65° C by heating. To this mixture, 40 mg of V-65 were added and heated at 65° C for 2 hours while stirring. Two hours later, 40 mg of V-65 were added thereto and heated for another 3 hours while stirring. The obtained reaction solution was poured in hexane (1,000 mL) while stirring, and Comparative Polymer 1 (weight average molecular weight: 84,000) was obtained by heating and drying the precipitation formed in the reaction solution.

### -Synthesis of Comparative Polymer 2-

DMAPAAm (1.5 g), Monomer M-4 (3.5 g), AX-707S (21.7 g), MMA (2.0 g) and methyl ethyl ketone (35 g) were introduced in a nitrogen-substituted three-neck flask, and this was stirred using a stirrer while allowing nitrogen to flow in the flask, and the temperature was raised to 65° C by heating. To this mixture, 40 mg of V-65 were added and heated at 65° C for 2 hours while stirring. Two hours later, 40 mg of V-65 were added thereto and heated for another 3 hours while stirring. The obtained reaction solution was poured in hexane (1,000 mL) while stirring, and Comparative Polymer 2 (weight average molecular weight: 64,000) was obtained by heating and drying the precipitation formed in the reaction solution.

### -Synthesis of Comparative Polymer 3-

RUVA-93 (4.0 g), MMA (16.0 g), n-dodecylmercaptan (0.06 g) and methyl ethyl ketone (40 g) were introduced in a nitrogen-substituted three-neck flask, and this was stirred using a stirrer while allowing nitrogen to flow in the flask, and the temperature was raised to 65° C by heating. To this mixture, 15 mg of V-65 were added and heated for 2 hours while stirring at 65° C. Two hours later, 15 mg of V-65 were added thereto and heated for another 3 hours while stirring. The obtained reaction solution was poured in hexane (1,000 mL) while stirring, and Comparative Polymer 3 (weight average molecular weight: 98,000) was obtained by heating and drying the precipitation formed in the reaction solution.

### -Synthesis of Comparative Polymer 4-

RUVA-93 (5.0 g), tBuAEMA (1.0 g), AA-6 (14.0 g) and methyl ethyl ketone (40 g) were introduced in a nitrogen-substituted three-neck flask, and this was stirred using a stirrer while allowing nitrogen to flow in the flask, and the temperature was raised to 65° C by heating. To this mixture, 30 mg of V-65 were added and heated at 65° C for 2 hours while stirring. Two hours later, 30 mg of V-65 were added thereto and heated for another 3 hours while stirring. The obtained reaction solution was poured in hexane (1,000 mL) while stirring, and Comparative Polymer 4 (weight average molecular weight: 110,000) was obtained by heating and drying the precipitation formed in the reaction solution.

### -Synthesis of Comparative Polymer 5-

RUVA-93 (4.0 g), tBuAEMA (0.4 g), AA-6 (15.6 g) and methyl ethyl ketone (40 g) were introduced in a nitrogen-substituted three-neck flask, and this was stirred using a stirrer while allowing nitrogen to flow in the flask, and the temperature was raised to 65° C by heating. To this mixture, 40 mg of V-65 were added and heated at 65° C for 2 hours while stirring. Two hours later, 40 mg of V-65 were added thereto and heated for another 3 hours while stirring. The obtained reaction solution was poured in hexane (1,000 mL) while stirring, and Comparative Polymer 5 (weight average molecular weight: 91,000) was obtained by heating and drying the precipitation formed in the reaction solution.

### -Synthesis of Comparative Polymer 6-

RUVA-93 (4.0 g), tBuAEMA (7.0 g), AA-6 (9.0 g) and methyl ethyl ketone (40 g) were introduced in a nitrogen-substituted three-neck flask, and this was stirred using a stirrer while allowing nitrogen to flow in the flask, and the temperature was raised to 65° C by heating. To this mixture, 40 mg of V-65 were added and heated at 65° C for 2 hours while stirring. Two hours later, 40 mg of V-65 were added thereto and heated for another 3 hours while stirring. The obtained reaction solution was poured in hexane (1,000 mL) while stirring, and Comparative Polymer 6 (weight average molecular weight: 52,000) was obtained by heating and drying the precipitation formed in the reaction solution.

### -Preparation of Mill Base 1-

Specific Polymer 2 (8.0 g) was dissolved in 2-phenoxyethylacrylate (trade name: SR339, manufactured by Sartomer Company, Inc., polymerizable compound) (72 g), and this was dispersed together with a yellow pigment PY120 (trade name: NOVOPERM YELLOW H2G, manufactured by Clariant Japan) (20 g) using a bead mill (MOTOR MILL M50, manufactured by Eiger Machinery, Inc., beads: zirconia beads, diameter of 0.65 mm) at a circumferential velocity of 9.0 m/s for 2.0 hours. Mill base (highly concentrated pigment dispersion) 1 was thus obtained.

### -Preparation of Mill Base 2 to Mill Base 7 and Mill Base 101 to Mill Base 105-

Mill Base 2 to Mill Base 6 and Mill Base 101 to Mill Base 105 were prepared in a similar manner to the preparation of Mill Base 1, except that Specific Polymers 2 to 6 and Comparative Polymers 1, 2 and 4 to 6 were used instead of Specific Polymer 1, respectively. The composition of the pigment dispersants and the amounts of additives used in the preparation of the mill bases are shown in Table 1. The composition ratio of Comparative Polymer 3, which is an ultraviolet absorbent, is also shown in Table 1.

**Table 1**

| | | | Mill Base | | | | | | | Mill Base | | | | | Ultraviolet absorbent |
|---|---|---|---|---|---|---|---|---|---|---|---|---|---|---|---|
| | | | | 1 | 2 | 3 | 4 | 5 | 6 | 101 | 102 | 103 | 104 | 105 | |
| | | | Specific Polymer | | | | | | | Comparative Polymer | | | | | |
| | | | | 1 | 2 | 3 | 4 | 5 | 6 | 1 | 2 | 4 | 5 | 6 | 3 |
| Pigment dispersant composition (%by mass) | (a) UV absorbing group | RUVA-93 | | 5 | 10 | 1 | 10 | 10 | 5 | 20 | | 25 | 20 | 20 | 20 |
| | (b) amino group (pigment adsorbing group) | tBuAEMA | | | | | 2 | | | | | 5 | 2 | 35 | |
| | | DMAPAAm | | 20 | 7.5 | 7.5 | | 7.5 | 8 | | 7.5 | | | | |
| | (b) pigment partial skeleton (pigment adsorbing group) | M-4 | | | 17.5 | 17.5 | 3 | 17.5 | 7 | | 17.5 | | | | |
| | | M-17 | | 10 | | | | | | | | | | | |
| | (c) macromonomer | AA-6 | | 50 | | | 70 | 10 | 80 | 80 | | 70 | 78 | 45 | |
| | | FA10L | | 15 | | | | | | | | | | | |
| | | AX-707S | | | 65 | 74 | | | | | 65 | | | | |
| | other monomer | MMA | | | | | 15 | 55 | | | 10 | | | | 80 |
| Addition amount | pigment dispersant | (g) | | 8 | 8 | 8 | 8 | 8 | 8 | 8 | 8 | 8 | 8 | 8 | - |
| | monomer (SR339) | (g) | | 72 | 72 | 72 | 72 | 72 | 72 | 72 | 72 | 72 | 72 | 72 | - |
| | pigment (PY120) | (g) | | 20 | 20 | 20 | 20 | 20 | 20 | 20 | 20 | 20 | 20 | 20 | - |

### Examples 1 to 6 and Comparative Examples 1 to 7

### -Preparation of Inkjet Ink-

The polymerizable compound, polymerization initiator, surfactant, polymerization inhibitor and ultraviolet absorbent were added to each of the mill bases in the amounts described in Table 2, and mixed. The mixtures were subjected to filteration while applying pressure using a membrane filter, thereby obtaining the inks for inkjet for Examples 1 to 6 and Comparative Examples 1 to 7. The abbreviated expressions and the trade names of the compounds used in the preparation of inks and the name of the manufactures are as follows. Further in Table 2, Sp.1, Sp. 2, Sp. 3, Sp. 4, Sp. 5 andSp. 6 denote Specific Polymer 1, Specific Polymer 2, Specific Polymer 3, Specific Polymer 4, Specific Polymer 5, and Specific Polymer 6 respectively, and C. 1, C. 2, C. 4, C. 5 and C. 6 denote Comparative Polymer 1, Comparative Polymer 2, Comparative Polymer 4, Comparative Polymer 5 and Comparative Polymer 6 respectively.

### -Polymerizable Compound

SR508 (dipropyleneglycol diacrylate, manufactured by Sartomer Company, Inc.)
SR238 (1,6-hexanediol diacrylate, manufactured by Sartomer Company, Inc.)
SR339 (2-phenoxyethyl acrylate, manufactured by Sartomer Company, Inc.)

### -Polymerization Initiator

LUCIRIN TPO-L (acylphosphine oxide compound, manufactured by BASF Japan Ltd.)
IRGACURE 184 (manufactured by Ciba Inc.)
Benzophenone (manufactured by Wako Pure Chemical Industries, Ltd.)

### -Ultraviolet Absorbent

RUVA-93 (2-(2'-hyrdroxy-5'-methacryloyloxyethylphenyl)-2H-benzotriazole, manufactured by Otsuka Chemical Co., Ltd.)
Comparative Polymer 3 (2-(2'-hydroxy-5'-methacryloyloxyethylphenyl)-2H-benzotriazole/methyl methacrylate copolymer)

### -Surfactant

BYK-307 (manufactured by BYK Additives & Instruments)
-Polymerization inhibitor
MEHQ (methoxyhydroquinone, manufactured by Tokyo Chemical Industry Co., Ltd.)

### Evaluation of Inkjet Ink

The obtained inkjet inks were evaluated in accordance with the following evaluation criteria. The results of the evaluation are shown in Table 2.

### -Ink Viscosity-

The viscosity at 40° C of each of the inkjet inks was measured by using an E-type viscometer (manufactured by Toki Sangyo Co., Ltd.) and evaluated in accordance with the following evaluation criteria.
A: less than 25 mPa·s
B: 25 mPa·s or higher but less than 40 mPa·s
C: 40 mPa·s or higher (a level in which discharge is problematic)

### -Stability in Viscosity-

The dispersed state after storing the inkjet ink at 25° C for 1 month and the dispersed state after storing the inkjet ink at 60° C for 1 week were evaluated by increase in viscosity, in accordance with the following evaluation criteria.
A: The increase in viscosity is 5% or less, and the discharge is not problematic.
B: The increase in viscosity is 5% or more but less than 10%, and the discharge is not problematic.
C: The increase in viscosity is 10% or more but less than 20%, and the discharge stability is lowered.
D: The increase in viscosity is 20% or more, and the discharge stability is significantly lowered.

### -Curability-

Print sample was obtained by performing printing using each of the obtained inkjet inks on a vinyl chloride film using a piezo inkjet head (CA3 head, manufactured by Toshiba Tec Corporation, print density: 300 dpi, discharge frequency: 4 kHz, number of nozzles: 64), and then exposing the inkjet ink with light using a Deep UV lamp (model number: SP-7, manufactured by Ushio Inc.) at a condition at which the amount of energy was 1,000 mJ/cm² or 1,500 mJ/cm².

The curability was evaluated by touching the cured film with a finger to see whether or not the cured film was sticky, in accordance with the following evaluation criteria.
A: The cured film is sticky.
B: The cured film is slightly sticky.
C: The cured film is significantly sticky.

### -Light Fastness-

A solid image was formed on a vinyl chloride film using the piezo inkjet head used in the evaluation of curability, and after curing the image by exposing the same to light in an amount of 2,000 mJ/cm², the image was exposed to xenon light (100,000 lx) using a weather meter (ATLAS C. 165) for 7 days. The image density before and after the xenon irradiation was measured by using a reflection densitometer (X-RITE 310 TR), and was evaluated in accordance with the residual ratio of the colorant. The measurement was performed with the reflection density fixed at 1.0.
A: The residual ratio of colorant is 95% or higher.
B: The residual ratio of colorant is 90% or higher but less than 95%.
C: The residual ratio of colorant is less than 90%.

**Table 2**

| | | | | | | Examples | | | | | | | Comparative Examples | | | | | | |
|---|---|---|---|---|---|---|---|---|---|---|---|---|---|---|---|---|---|---|---|
| | | | | | | | 1 | 2 | 3 | 4 | 5 | 6 | 1 | 2 | 3 | 4 | 5 | 6 | 7 |
| Addition amount (g) | Pigment dispersion | | Mill base | | Type | | 1 | 2 | 3 | 4 | 5 | 6 | 101 | 102 | 101 | 101 | 103 | 104 | 105 |
| | | | | | Amount | | 20 | 20 | 20 | 20 | 20 | 20 | 20 | 20 | 20 | 20 | 20 | 20 | 20 |
| | | | Pigment dispersion (type of polymer) | | | | Sp. 1 | Sp. 2 | Sp. 3 | Sp. 4 | Sp.56 | Sp. 6 | C. 1 | C. 2 | C. 1 | C. 1 | C. 4 | C. 5 | C. 6 |
| | Polymerizable compound | | SR508 | | | | 30 | 30 | 30 | 30 | 30 | 30 | 30 | 30 | 30 | 30 | 30 | 30 | 30 |
| | | | SR238 | | | | 20 | 20 | 20 | 20 | 20 | 20 | 20 | 20 | 20 | 20 | 20 | 20 | 20 |
| | | | SR339 | | | | 17.8 | 17.8 | 17.8 | 17.8 | 17.8 | 17.8 | 17.8 | 17.8 | 17.6 | 16.8 | 17.8 | 17.8 | 17.8 |
| | Polymerization initiator | | Lucirin TPO-L | | | | 8 | 8 | 8 | 8 | 8 | 8 | 8 | 8 | 8 | 8 | 8 | 8 | 8 |
| | | | IRGACURE 184 | | | | 2 | 2 | 2 | 2 | 2 | 2 | 2 | 2 | 2 | 2 | 2 | 2 | 2 |
| | | | Benzophenone | | | | 2 | 2 | 2 | 2 | 2 | 2 | 2 | 2 | 2 | 2 | 2 | 2 | 2 |
| | Ultraviolet absorbent | | RUVA-93 | | | | | | | | | | | | 0.2 | | | | |
| | | | Comparative Polymer 3 | | | | | | | | | | | | | 1 | | | |
| | Surfactant | | BYK-307 | | | | 0.1 | 0.1 | 0.1 | 0.1 | 0.1 | 0.1 | 0.1 | 0.1 | 0.1 | 0.1 | 0.1 | 0.1 | 0.1 |
| | Polymerization inihibitor | | MEHQ | | | | 0.1 | 0.1 | 0.1 | 0.1 | 0.1 | 0.1 | 0.1 | 0.1 | 0.1 | 0.1 | 0.1 | 0.1 | 0.1 |
| Evaluation of ink | Viscosity | Ink viscosity | | | | | A | A | A | A | A | A | A | A | A | A | A | A | A |
| | | Viscosity stability (dispersion stability) | | | 25° C | | A | A | A | A | A | A | A | C | A | A | B | C | B |
| | | | | | 60° C | | A | A | B | B | B | A | A | D | A | A | C | C | C |
| | Curability | | | 1000 mJ/cm² | | | A | A | A | A | A | A | A | C | C | C | C | B | B |
| | | | | 1500 mJ/cm² | | | A | A | A | A | A | A | A | B | B | B | B | A | A |
| | Light fastness | | | | | | A | A | A | A | A | A | C | A | A | A | A | A | A |

As shown in Table 2, the inkjet inks prepared in Examples 1 to 6, in which Specific Polymers 1 to 6 were used as a pigment dispersant, were able to be stored stably over a long term not only at room temperature but also at high temperature. Comparative Examples 1, 3 and 4, in which a pigment dispersant not having a pigment adsorbing group (Comparative Polymer 1) was used instead of the specific polymer, exhibited a pigment dispersibility that was as low as to be problematic in practical applications. Further, when the specific polymer was used as the pigment dispersant, the sensitivity during curing was not problematic even when exposure was performed at low intensity. On the other hand, in cases in which Comparative Polymer 1 having an ultraviolet absorbing group was used as the pigment dispersant or the ultraviolet absorbent (Comparative Polymer 3) was added to the ink, sufficient curing was not achieved when exposure was performed at low intensity. Moreover, the images formed from the ink compositions according to the invention, in which the specific polymer is included, exhibited excellent light fastness as compared with the case of the image formed from the ink in which Comparative Polymer 2 not having an ultraviolet absorbing group that underwent color fading when irradiated with light.

In view of the above, the ink composition for inkjet according to the invention, which includes the specific polymer having a pigment adsorbing group that exhibits an excellent adsorption ability with respect to the pigment, in addition to the ultraviolet absorbing group, exhibits an excellent adsorption ability with respect to the pigment. Further, the reason why the light fastness of the colorant was increased without impairing the curing sensitivity is presumed to be the inclusion of the ultraviolet absorbing group in the specific polymer.

According to the invention, it is possible to provide an ink composition in which pigment is finely dispersed and the excellent dispersion stability of the pigment is maintained even during long-term storage; and an ink composition for inkjet that exhibits excellent curability during formation of an image by inkjet recording and excellent light fastness of the formed image.

Exemplary embodiments of the present invention include the following embodiments. However the invention is not limited to the following exemplary embodiments.

## Claims

1. An ink composition for inkjet comprising:
a pigment dispersant including
a repeating unit having an ultraviolet absorbing group, in an amount of from 0.5% by mass to 20% by mass with respect to the total mass of the pigment dispersant, and
a repeating unit having a pigment adsorbing group, in an amount of from 5% by mass to 30% by mass with respect to the total mass of the pigment dispersant;
a pigment;
a polymerizable compound; and
a photopolymerization initiator;
wherein:
(i) the ultraviolet absorbing group includes at least one selected from the group consisting of
a group obtained by removing one hydrogen atom from a benzotriazole compound,
a group obtained by removing one hydrogen atom from a benzophenone compound, and
a group obtained by removing one hydrogen atom from a triazine compound; and
(ii) the repeating unit having a pigment adsorbing group is represented by the following Formula (1): 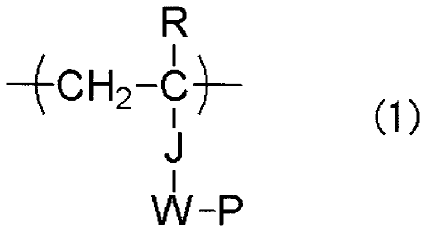 wherein:
R represents a hydrogen atom or a methyl group;
J represents -COO-, -CONR¹- or a phenylene group;
R¹ represents a hydrogen atom, an alkyl group, an aryl group or an arylalkyl group;
W represents a single bond or a divalent linking group; and
P is selected from the group consisting of: a group obtained by removing one hydrogen atom from acridone, a group obtained by removing one hydrogen atom from anthraquinone, a group obtained by removing one hydrogen atom from naphthalimide, a group obtained by removing one hydrogen atom from benzimidazole, a group obtained by removing one hydrogen atom from quinacridone, and a group obtained by removing one hydrogen atom from benzimidazolone.

2. The ink composition for inkjet according to claim 1 wherein the ultraviolet absorbing group includes a group obtained by removing one hydrogen atom from a benzotriazole compound.

3. The ink composition for inkjet according to claim 1 or 2, wherein the pigment dispersant further comprises, as a copolymer component, a repeating unit derived from a macromonomer having an ethylenically unsaturated bond at its terminal, in an amount of from 10% by mass to 80% by mass with respect to the total mass of the pigment dispersant.

4. The ink composition for inkjet according to claim 3, wherein the macromonomer having an ethylenically unsaturated bond at its terminal is represented by the following Formula (2): 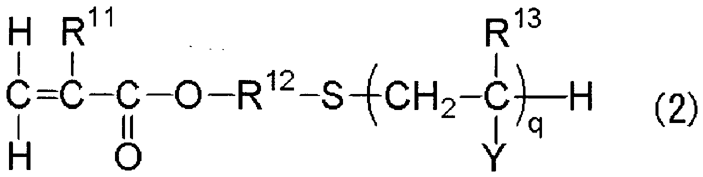 wherein in Formula (2), R¹¹ and R¹³ each independently represent a hydrogen atom or a methyl group; R¹² represents an alkylene group having from 1 to 12 carbon atoms; Y represents a phenyl group, a phenyl group having an alkyl group having from 1 to 4 carbon atoms, or COOR¹⁴; R¹⁴ represents an alkyl group having from 1 to 6 carbon atoms, a phenyl group or an arylalkyl group having from 7 to 10 carbon atoms; and q represents an integer of from 20 to 200.

5. The ink composition for inkjet according to claim 3 or 4, wherein the macromonomer having an ethylenically unsaturated bond at its terminal is a polymer which is obtained by addition polymerization of a lactone or a monomer having an ethylenically unsaturated bond, and has an ethylenically unsaturated bond at its terminal.

6. The ink composition for inkjet according to any one of claims 3 to 5, wherein the pigment dispersant is a graft polymer which comprises:
the repeating unit having an ultraviolet absorbing group, in an amount of from 0.5% by mass to 20% by mass with respect to the total mass of the pigment dispersant;
the repeating unit having a pigment adsorbing group, in an amount of from 5% by mass to 30% by mass with respect to the total mass of the pigment dispersant; and
the repeating unit derived from a macromonomer having an ethylenically unsaturated bond at its terminal, in an amount of from 10% by mass to 80% by mass with respect to the total mass of the pigment dispersant.

7. The ink composition for inkjet according to any one of claims 1 to 6, wherein the pigment includes at least one selected from the group consisting of C.I. Pigment Yellow 74, C.I. Pigment Yellow 120, C.I. Pigment Yellow 150, C.I. Pigment Yellow 155, C.I. Pigment yellow 180 and C.I. Pigment yellow 185.

## Patentansprüche

1. Tintenzusammensetzung für Tintenstrahl, umfassend:
ein Pigmentdispergiermittel mit
einer Wiederholungseinheit mit einer ultraviolettabsorbierenden Gruppe in einer Menge von 0,5 Massen-% bis 20 Massen-%, bezogen auf die Gesamtmasse des Pigmentdispergiermittels, und
einer Wiederholungseinheit mit einer pigmentadsorbierenden Gruppe in einer Menge von 5 Massen-% bis 30 Massen-%, bezogen auf die Gesamtmasse des Pigmentdispergiermittels;
ein Pigment;
eine polymerisierbare Verbindung und
einen Photopolymerisationsinitiator;
wobei
(i) die ultraviolettabsorbierende Gruppe mindestens ein Mitglied aus der Gruppe bestehend aus einer durch Entfernung eines Wasserstoffatoms von einer Benzotriazolverbindung erhaltenen Gruppe, einer durch Entfernung eines Wasserstoffatoms von einer Benzophenon-verbindung erhaltenen Gruppe und einer durch Entfernung eines Wasserstoffatoms von einer Triazinverbindung erhaltenen Gruppe enthält und
(ii) die Wiederholungseinheit mit einer pigmentadsorbierenden Gruppe durch die folgende Formel (1) wiedergegeben wird: 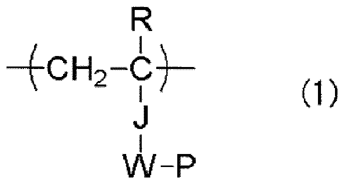 wobei:
R für ein Wasserstoffatom oder eine Methylgruppe steht;
J für -COO-, -CONR¹- oder eine Phenylengruppe steht;
R¹ für ein Wasserstoffatom, eine Alkylgruppe, eine Arylgruppe oder eine Arylalkylgruppe steht;
W für eine Einfachbindung oder eine zweiwertige Brückengruppe steht und
P aus der Gruppe bestehend aus:
einer durch Entfernung eines Wasserstoffatoms von Acridon erhaltenen Gruppe,
einer durch Entfernung eines Wasserstoffatoms von Anthrachinon erhaltenen Gruppe,
einer durch Entfernung eines Wasserstoffatoms von Naphthalimid erhaltenen Gruppe,
einer durch Entfernung eines Wasserstoffatoms von Benzimidazol erhaltenen Gruppe,
einer durch Entfernung eines Wasserstoffatoms von Chinacridon erhaltenen Gruppe
und einer durch Entfernung eines Wasserstoffatoms von Benzimidazolon erhaltenen Gruppe
ausgewählt ist.

2. Tintenzusammensetzung für Tintenstrahl nach Anspruch 1, wobei die ultraviolettabsorbierende Gruppe eine durch Entfernung eines Wasserstoffatoms von einer Benzotriazolverbindung erhaltene Gruppe enthält.

3. Tintenzusammensetzung für Tintenstrahl nach Anspruch 1 oder 2, wobei das Pigmentdispergier-mittel ferner als Copolymer-Komponente eine Wiederholungseinheit, die sich von einem Makromonomer mit einer endständigen ethylenisch ungesättigten Bindung ableitet, in einer Menge von 10 Massen-% bis 80 Massen-%, bezogen auf die Gesamtmasse des Pigmentdispergiermittels, umfasst.

4. Tintenzusammensetzung für Tintenstrahl nach Anspruch 3, wobei das Makromonomer mit einer endständigen ethylenisch ungesättigten Bindung durch die folgende Formel (2) wiedergegeben wird: 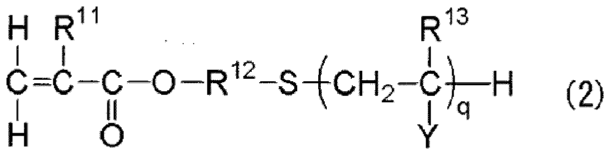 wobei in Formel (2) R¹¹ und R¹³ jeweils unabhängig voneinander für ein Wasserstoffatom oder eine Methylgruppe stehen; R¹² für eine Alkylengruppe mit 1 bis 12 Kohlenstoffatomen steht; Y für eine Phenylgruppe, eine Phenylgruppe mit einer Alkylgruppe mit 1 bis 4 Kohlenstoffatomen oder COOR¹⁴ steht; R¹⁴ für eine Alkylgruppe mit 1 bis 6 Kohlenstoffatomen, eine Phenylgruppe oder eine Arylalkylgruppe mit 7 bis 10 Kohlenstoffatomen steht und q für eine ganze Zahl von 20 bis 200 steht.

5. Tintenzusammensetzung für Tintenstrahl nach Anspruch 3 oder 4, wobei es sich bei dem Makromonomer mit einer endständigen ethylenisch ungesättigten Bindung um ein durch Additionspolymerisation eines Lactons oder eines Monomers mit einer ethylenisch ungesättigten Bindung erhaltenes Polymer mit einer endständigen ethylenisch ungesättigten Bindung handelt.

6. Tintenzusammensetzung für Tintenstrahl nach einem der Ansprüche 3 bis 5, wobei es sich bei dem Pigmentdispergiermittel um ein Pfropfpolymer handelt, das:
die Wiederholungseinheit mit einer ultraviolettabsorbierenden Gruppe in einer Menge von 0,5 Massen-% bis 20 Massen-%, bezogen auf die Gesamtmasse des Pigmentdispergiermittels;
die Wiederholungseinheit mit einer pigmentadsorbierenden Gruppe in einer Menge von 5 Massen-% bis 30 Massen-%, bezogen auf die Gesamtmasse des Pigmentdispergiermittels; und
die Wiederholungseinheit, die sich von einem Makromonomer mit einer endständigen ethylenisch ungesättigten Bindung ableitet, in einer Menge von 10 Massen-% bis 80 Massen-%, bezogen auf die Gesamtmasse des Pigmentdispergiermittels;
umfasst.

7. Tintenzusammensetzung für Tintenstrahl nach einem der Ansprüche 1 bis 6, wobei das Pigment mindestens ein Mitglied aus der Gruppe bestehend aus C.I. Pigment Yellow 74, C.I. Pigment Yellow 120, C.I. Pigment Yellow 150, C.I. Pigment Yellow 155, C.I. Pigment Yellow 180 und C.I. Pigment Yellow 185 enthält.

## Revendications

1. Composition d'encre pour jet d'encre comprenant :
un dispersant de pigment comportant
un motif répétitif ayant un groupe absorbant les ultraviolets, dans une quantité de 0,5 % en masse à 20 % en masse par rapport à la masse totale du dispersant de pigment, et
un motif répétitif ayant un groupe adsorbant les pigments, dans une quantité de 5 % en masse à 30 % en masse par rapport à la masse totale du dispersant de pigment ;
un pigment ;
un composé polymérisable ; et
un photoinitiateur de polymérisation ;
dans laquelle :
(i) le groupe absorbant les ultraviolets comporte au moins un élément choisi dans le groupe constitué par
un groupe obtenu en retirant un atome d'hydrogène d'un composé de benzotriazole,
un groupe obtenu en retirant un atome d'hydrogène d'un composé de benzophénone, et
un groupe obtenu en retirant un atome d'hydrogène d'un composé de triazine ; et
(ii) le motif répétitif ayant un groupe adsorbant les pigments est représenté par la formule (1) suivante : 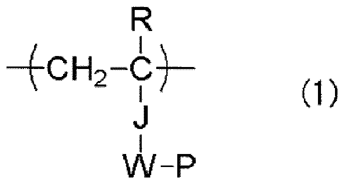 dans laquelle :
R représente un atome d'hydrogène ou un groupe méthyle ;
J représente -COO-, -CONR¹- ou un groupe phénylène ;
R¹ représente un atome d'hydrogène, un groupe alkyle,
un groupe aryle ou un groupe arylalkyle ;
W représente une simple liaison ou un groupe de liaison divalent ; et
P est choisi dans le groupe constitué par :
un groupe obtenu en retirant un atome d'hydrogène de l'acridone,
un groupe obtenu en retirant un atome d'hydrogène de l'anthraquinone,
un groupe obtenu en retirant un atome d'hydrogène du naphtalimide,
un groupe obtenu en retirant un atome d'hydrogène du benzimidazole,
un groupe obtenu en retirant un atome d'hydrogène de la quinacridone, et
un groupe obtenu en retirant un atome d'hydrogène de la benzimidazolone.

2. Composition d'encre pour jet d'encre selon la revendication 1, dans laquelle le groupe absorbant les ultraviolets comporte un groupe obtenu en retirant un atome d'hydrogène d'un composé de benzotriazole.

3. Composition d'encre pour jet d'encre selon la revendication 1 ou 2, dans laquelle le dispersant de pigment comprend également, comme composant copolymère, un motif répétitif dérivé d'un macromonomère ayant une liaison éthyléniquement insaturée à son extrémité, dans une quantité de 10 % en masse à 80 % en masse par rapport à la masse totale du dispersant de pigment.

4. Composition d'encre pour jet d'encre selon la revendication 3, dans laquelle le macromonomère ayant une liaison éthyléniquement insaturée à son extrémité est représenté par la formule (2) suivante : 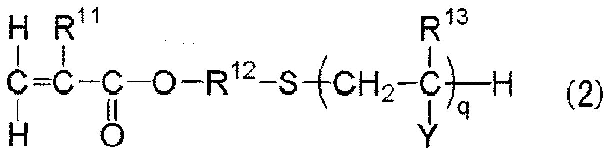 dans laquelle, dans la formule (2), R¹¹ et R¹³ représentent chacun indépendamment un atome d'hydrogène ou un groupe méthyle ; R¹² représente un groupe alkylène ayant de 1 à 12 atomes de carbone ; Y représente un groupe phényle, un groupe phényle ayant un groupe alkyle ayant de 1 à 4 atomes de carbone, ou COOR¹⁴ ; R¹⁴ représente un groupe alkyle ayant de 1 à 6 atomes de carbone, un groupe phényle ou un groupe arylalkyle ayant de 7 à 10 atomes de carbone ; et q représente un entier de 20 à 200.

5. Composition d'encre pour jet d'encre selon la revendication 3 ou 4, dans laquelle le macromonomère ayant une liaison éthyléniquement insaturée à son extrémité est un polymère qui est obtenu par polymérisation par addition d'une lactone ou d'un monomère ayant une liaison éthyléniquement insaturée, et a une liaison éthyléniquement insaturée à son extrémité.

6. Composition d'encre pour jet d'encre selon l'une quelconque des revendications 3 à 5, dans laquelle le dispersant de pigment est un polymère greffé qui comprend :
le motif répétitif ayant un groupe absorbant les ultraviolets, dans une quantité de 0,5 % en masse à 20 % en masse par rapport à la masse totale du dispersant de pigment ;
le motif répétitif ayant un groupe adsorbant les pigments, dans une quantité de 5 % en masse à 30 % en masse par rapport à la masse totale du dispersant de pigment ; et
le motif répétitif dérivé d'un macromonomère ayant une liaison éthyléniquement insaturée à son extrémité, dans une quantité de 10 % en masse à 80 % en masse par rapport à la masse totale du dispersant de pigment.

7. Composition d'encre pour jet d'encre selon l'une quelconque des revendications 1 à 6, dans laquelle le pigment comporte au moins un élément choisi dans le groupe constitué par le pigment C.I. jaune 74, le pigment C.I. jaune 120, le pigment C.I. jaune 150, le pigment C.I. jaune 155, le pigment C.I. jaune 180 et le pigment C.I. jaune 185.
